(19) Europäisches Patentamt / European Patent Office / Office européen des brevets

(11) **EP 4 604 527 A1**

(12) **EUROPEAN PATENT APPLICATION**
published in accordance with Art. 153(4) EPC

(43) Date of publication:
**20.08.2025 Bulletin 2025/34**

(21) Application number: **23876274.4**

(22) Date of filing: **07.07.2023**

(51) International Patent Classification (IPC):
**H04N 19/136** (2014.01)   **H04N 19/132** (2014.01)
**H04N 19/20** (2014.01)

(52) Cooperative Patent Classification (CPC):
**H04N 19/132; H04N 19/136; H04N 19/14;**
**H04N 19/146; H04N 19/172; H04N 19/20**

(86) International application number:
**PCT/CN2023/106439**

(87) International publication number:
**WO 2024/078066 (18.04.2024 Gazette 2024/16)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **11.10.2022 CN 202211263583**

(71) Applicant: **Tencent Technology (Shenzhen)
Company Limited
Shenzhen, Guangdong 518057 (CN)**

(72) Inventor: **LIU, Zizheng
Shenzhen, Guangdong 518057 (CN)**

(74) Representative: **EP&C
P.O. Box 3241
2280 GE Rijswijk (NL)**

(54) **VIDEO DECODING METHOD AND APPARATUS, VIDEO ENCODING METHOD AND APPARATUS, STORAGE MEDIUM, AND DEVICE**

(57)    A video decoding method, which is executed by a computer device, comprises: obtaining a media application scenario and a video content feature of original video data to be encoded (S101); according to the media application scenario and the video content feature, determining a target sampling parameter for sampling the original video data (S 102); sampling the original video data according to the target sampling parameter so as to obtain sampled video data (S 103); and encoding the sampled video data to obtain video encoded data corresponding to the original video data (S104).

FIG. 3

**Description**

RELATED APPLICATION

This application claims priority to Chinese Patent Application No. 2022112635838, entitled "VIDEO DECODING METHOD AND APPARATUS, VIDEO ENCODING METHOD AND APPARATUS, STORAGE MEDIUM, AND DEVICE" filed with the China National Intellectual Property Administration on October 11, 2022, which is incorporated herein by reference in its entirety.

FIELD OF THE TECHNOLOGY

This application relates to the field of data processing technologies, and in particular, to a video decoding method and apparatus, a video encoding method and apparatus, a storage medium, a device, and a computer program product.

BACKGROUND OF THE DISCLOSURE

With the development of digital media technologies and computer technologies, videos are applied to various fields such as mobile communication, network recognition, and network television, which brings great convenience to entertainment and life of people. Under a condition of a limited bandwidth, a conventional encoder encodes a video frame, which easily causes a larger amount of redundant information in a video bitstream, resulting in relatively low encoding efficiency of video data.

SUMMARY

Various embodiments of this application provide a video decoding method and apparatus, a video encoding method and apparatus, a storage medium, a device, and a computer program product.
An aspect of the embodiments of this application provides a video encoding method, performed by a computer device. The method includes:

obtaining a media application scenario and a video content feature of to-be-encoded original video data;

determining, according to the media application scenario and the video content feature, a target sampling parameter for sampling the original video data;

sampling the original video data according to the target sampling parameter, to obtain sampled video data; and

encoding the sampled video data, to obtain encoded video data corresponding to the original video data.

An aspect of the embodiments of this application provides a video decoding method, performed by a computer device. The method includes:

obtaining to-be-decoded encoded video data and a target sampling parameter corresponding to the encoded video data, the encoded video data being obtained by encoding sampled video data, the sampled video data being obtained by sampling original video data corresponding to the encoded video data based on the target sampling parameter, the target sampling parameter being determined according to a media application scenario and a video content feature of the original video data;

decoding the encoded video data, to obtain the sampled video data; and

performing sampling restoration on the sampled video data according to the target sampling parameter, to obtain the original video data corresponding to the encoded video data.

An aspect of the embodiments of this application provides a video decoding apparatus, including:

a first obtaining module, configured to obtain to-be-decoded encoded video data and a target sampling parameter corresponding to the encoded video data, the encoded video data being obtained by encoding sampled video data, the sampled video data being obtained by sampling original video data corresponding to the encoded video data based on the target sampling parameter, the target sampling parameter being determined according to a media application scenario and a video content feature of the original video data;

a decoding module, configured to decode the encoded video data, to obtain the sampled video data; and

a sampling restoration module, configured to perform sampling restoration on the sampled video data according to the target sampling parameter, to obtain the original video data corresponding to the encoded video data.

An aspect of the embodiments of this application provides a video encoding apparatus, including:

a second obtaining module, configured to obtain a media application scenario and a video content feature of to-be-encoded original video data;

a second determining module, configured to determine, according to the media application scenario and the video content feature, a target sampling parameter for sampling the original video data;

a sampling module, configured to sample the original video data according to the target sampling parameter, to obtain sampled video data; and

an encoding module, configured to encode the sampled video data, to obtain encoded video data corresponding to the original video data.

An aspect of the embodiments of this application provides a computer device, including: a processor and a memory,
the processor being connected to the memory, the memory being configured to store computer-readable instructions, and the computer-readable instructions, when being executed by the processor, causing the computer device to perform the method provided in the embodiments of this application.

An aspect of the embodiments of this application provides a computer-readable storage medium, the computer-readable storage medium storing computer-readable instructions, the computer-readable instructions being suitable to be loaded and executed by a processor, to enable a computer device including the processor to perform the method provided in the embodiments of this application.

An aspect of the embodiments of this application provides a computer program product, the computer program product including computer-readable instructions, the computer-readable instructions being stored in a computer-readable storage medium. A processor of a computer device reads the computer-readable instructions from the computer-readable storage medium, and the processor executes the computer-readable instructions, to enable the computer device to perform the method provided in the embodiments of this application.

Details of one or more embodiments of this application are provided in the subsequent accompanying drawings and descriptions. Other features, objectives, and advantages of this application become apparent from the specification, the drawings, and the claims.

BRIEF DESCRIPTION OF THE DRAWINGS

To describe the technical solutions in embodiments of this application or in the existing technology more clearly, the following briefly describes the accompanying drawings required for describing the embodiments or the existing technology. Apparently, the accompanying drawings in the following description show merely some embodiments of the present disclosure, and a person of ordinary skill in the art may derive other drawings from these accompanying drawings without creative efforts.

FIG. 1 is a schematic diagram of a video data processing process according to an embodiment of this application.

FIG. 2 is a schematic diagram of a coding unit according to an embodiment of this application.

FIG. 3 is a schematic flowchart of a video encoding method according to an embodiment of this application.

FIG. 4 is a schematic diagram of a temporal sampling mode according to an embodiment of this application.

FIG. 5 is a schematic diagram of a spatial sampling mode according to an embodiment of this application.

FIG. 6 is a schematic diagram of a video decoding method according to an embodiment of this application.

FIG. 7 is a schematic structural diagram of a video decoding apparatus according to an embodiment of this application.

FIG. 8 is a schematic structural diagram of a video encoding apparatus according to an embodiment of this application.

FIG. 9 is a schematic structural diagram of a computer device according to an embodiment of this application.

FIG. 10 is a schematic structural diagram of a computer device according to an embodiment of this application.

DESCRIPTION OF EMBODIMENTS

The following clearly and completely describes the technical solutions in embodiments of the present invention with reference to the accompanying drawings in the embodiments of the present invention. Apparently, the described embodiments are some of the embodiments of the present invention rather than all of the embodiments. All other embodiments obtained by a person of ordinary skill in the art based on the embodiments of the present invention without creative efforts shall fall within the protection scope of the present invention.

This application relates to the field of cloud technologies. This application relates to cloud computing in the field of cloud technologies. Cloud computing is a computing mode, in which computing tasks are distributed on a resource pool formed by a large quantity of computers, so that various application systems can obtain computing power, storage space, and information services according to requirements. A network that provides resources is referred to as a "cloud". For a user, resources in a "cloud" seem to be infinitely expandable, and can be obtained readily, used on demand, and expanded readily. In this application, video data may be encoded and decoded through cloud computing.

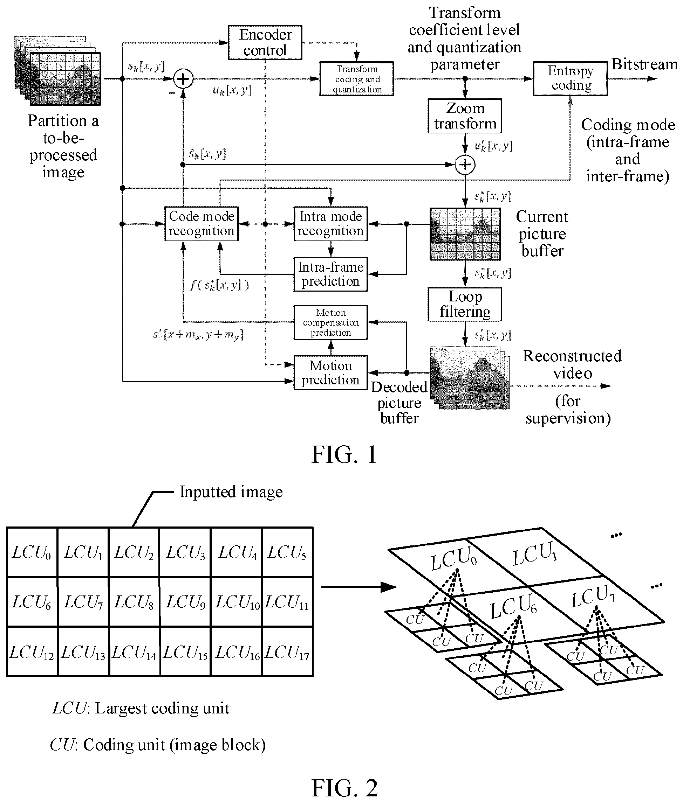

The embodiments of this application relate to a video data processing technology. A complete processing process of the video data may specifically include: video collection, video encoding, video file encapsulation, video transmission, video file decapsulation, video decoding, and final video presentation. The video collection is configured for converting an analog video into a digital video and storing the digital video in a digital video file format, that is, a video signal may be converted into binary digital information through video collection. Binary information converted from the video signal is a binary data flow. The binary information may also be referred to as a bitstream of the video signal. The video encoding is to convert a file in an original video format into a file in another video format by using a compression technology. Generation of video media content described in the embodiments of this application includes a real scene generated through camera collection and a screen content scene generated by a computer. A mode of obtaining a video signal may include two modes of photographing by a camera and generating by a computer. Due to different statistical characteristics, compression coding modes corresponding to the modes may be different. In modern mainstream video coding technologies, for example, international video coding standards such as high efficiency video coding (HEVC/H.265) and versatile video coding (VVC/H.266), and video coding standards such as audio video coding standard (AVS), or AVS3 (which is a third generation video coding standard pushed by an AVS standard set), a series of operations and processing are performed on an inputted raw video signal by using a hybrid coding framework. As shown in FIG. 1, FIG. 1 is a schematic diagram of a video data processing process according to an embodiment of this application. Specific content is shown in FIG. 1.

1. Block partition structure: An inputted image (for example, a video frame in video data) is partitioned into a plurality of non-overlapping processing units according to a size. Similar compression operations are performed on each processing unit. The processing unit is referred to as a coding tree unit (CTU) or a largest coding unit (LCU). The coding tree unit is generally divided from the largest coding unit. The CTU may continue to be further partitioned to obtain one or more basic coding units, referred to as coding units (CUs). Each CU is the most basic element in an encoding process. Various coding modes that may be configured for each CU are described below. As shown in FIG. 2, FIG. 2 is a schematic diagram of a coding unit according to an embodiment of this application. A relationship between an LCU (or a CTU) and a CU may be shown in FIG. 2.

2. Predictive coding includes an intra-frame prediction mode, an inter-frame prediction mode, and the like. A residual video signal is obtained after prediction of a raw video signal through a selected reconstructed video signal. An encoder side needs to select a most suitable one predictive coding mode for a current CU from a plurality of possible predictive coding modes, and informs a decoder side.

a. Intra-frame prediction (intra (picture) prediction): Predicted signals are from an encoded reconstructed region of a same image.

b. Inter-frame prediction (inter (picture) prediction) refers to that a predicted signal is from another encoded image (referred to as a reference image) different from a current image.

3. Transform&quantization: Transform operations such as discrete fourier transform (DFT) and discrete cosine transform (DCT, which is a subset of the DFT) are performed on a residual video signal to convert the signal into a transform domain, which is referred to as a conversion coefficient. A lossy quantization operation is further performed on a signal in the transform domain, and certain information is discarded, so that a quantized signal is readily available for compression and expression.

In some video coding standards, there may be more than one transform modes for selection. Therefore, the encoder side also needs to select one transform mode for the current CU and informs the decoder side of the mode. Fineness of the quantization is generally determined by a quantization parameter (QP). A larger QP indicates that coefficients with a larger value range are to be quantized into a same output, which generally brings greater distortion and a lower bit rate. On the contrary, a smaller QP indicates that coefficients within a smaller value range are to be quantized into a same output, which generally brings less distortion and a higher bit rate.

4. Entropy coding or statistical coding: Statistical compression coding is performed on a quantized transform domain signal according to a frequency of each value, and finally a binary (0 or 1) compressed bitstream is outputted. In addition, other information such as a selected mode and a motion vector generated through coding also require entropy coding to reduce a bit rate.

Statistical coding is a lossless coding mode that can effectively reduce a bit rate required for expressing a same signal. A common statistical coding mode is variable length coding (VLC) or content adaptive binary arithmetic coding (CABAC).

5. Loop filtering: A reconstructed decoded image may be obtained by performing operations such as inverse quantization, inverse transform, and predictive compensation (inverse operations of 2 to 4 in the foregoing) on an encoded image. Compared with a raw image, in a reconstructed image, some information may be different from that in the raw image due to the impact of quantization, causing a distortion. A filtering operation may be performed on the reconstructed image by using a deblocking filter, a sample adaptive offset (SAO) filter, an adaptive loop filter (ALF), or the like, to effectively reduce a degree of distortion caused by quantization. Because the filtered reconstructed image is used as a reference for subsequently encoding an image and is used for predicting a future signal, the foregoing filtering operation is also referred to as loop filtering, that is, a filtering operation in an encoding loop.

FIG. 1 shows a basic procedure of a video encoder. A $k^{th}$ CU (which is denoted as $S_k[\times, y]$) is used as an example for description in FIG. 1, where k is a positive integer greater than or equal to 1 and less than or equal to a quantity of CUs in an inputted current image, $S_k[\times, y]$ represents a pixel with coordinates of $[\times, y]$ in the $k^{th}$ CU, $\times$ represents a horizontal coordinate of the pixel, y represents a vertical coordinate of the pixel. After better processing of motion compensation or intra-frame prediction is performed on $S_k[\times, y]$, a predicted signal $\widehat{S_k}[\times, y]$ is obtained. $S_k[\times, y]$ is subtracted from $\widehat{S_k}[\times, y]$ to obtain a residual signal $U_k[\times, y]$, and then transform and quantization are performed on the residual signal $U_k[\times, y]$. Quantized outputted data has two different destinations: One is that the data is transmitted to an entropy encoder for entropy coding, and then an encoded bitstream is outputted to a buffer for storage and waits for transmission. The other is that dequantization and inverse transform are performed on the data, to obtain a signal $U'k[\times, y]$. The signal $U'_k[\times y]$ is added to $\widehat{S_k}[\times, y]$ to obtain a new predicted signal $S^*_k[\times, y]$, and $S^*_k[\times, y]$ is transmitted to a buffer of a current image for storage. Intra-image prediction is performed on $S^*_k[\times, y]$, to obtain $f(S^*_k[\times, y])$. Loop filtering is performed on $S^*_k[\times, y]$, to obtain $S'_k[\times, y]$, and $S'_k[\times, y]$ is transmitted to a buffer of a decoded image for storage, to generate a reconstructed video. Motion-compensation prediction is performed on $S'_k[\times, y]$ to obtain $S'_r[\times+m_x, y+m_y]$. $S'_r[\times+m_x, y+m_y]$ represents a reference block. $m_x$ and $m_y$ respectively represent a horizontal component and a vertical component of a motion vector.

After the video data is encoded, a data flow obtained through encoding needs to be encapsulated and transmitted to a user. The video file encapsulation means that encoded and compressed video and audio are stored in a file in a specific format in an encapsulation format (or container, or file container). A common encapsulation format includes an audio video interleaved (AVI) format, an ISO based media file format (ISOBMFF, which is a media file format based on international standard organization (ISO)). The ISOBMFF is an encapsulation standard of a media file. A most typical ISOBMFF file is a moving picture experts group 4 (MP4) file. An encapsulated file is transmitted to a decoding device through a video. After the decoding device may perform inverse operations such as decapsulation and decoding, final video content presentation is performed in the decoding device.

A file decapsulation process of the decoding device is opposite to the file encapsulation process. The decoding device may perform decapsulation on the encapsulated file according to a file format requirement during encapsulation, to obtain a video bitstream. A decoding process of the decoding device is also opposite to the encoding process. The decoding device may decode the video bitstream, to restore video data. According to the foregoing encoding process, on a decoder side, after obtaining a compressed bitstream, for each CU, a decoder first performs entropy decoding to obtain various mode information and quantized transform coefficients. Inverse quantization and inverse transform are performed on the coefficients, to obtain a residual video signal. In addition, a predicted signal corresponding to the CU may be obtained according to the known encoding mode information, and a reconstructed signal may be obtained by adding the residual video signal and the predicted signal. Finally, a loop filtering operation needs to be performed on a reconstructed value of a decoded image, to generate a final output signal.

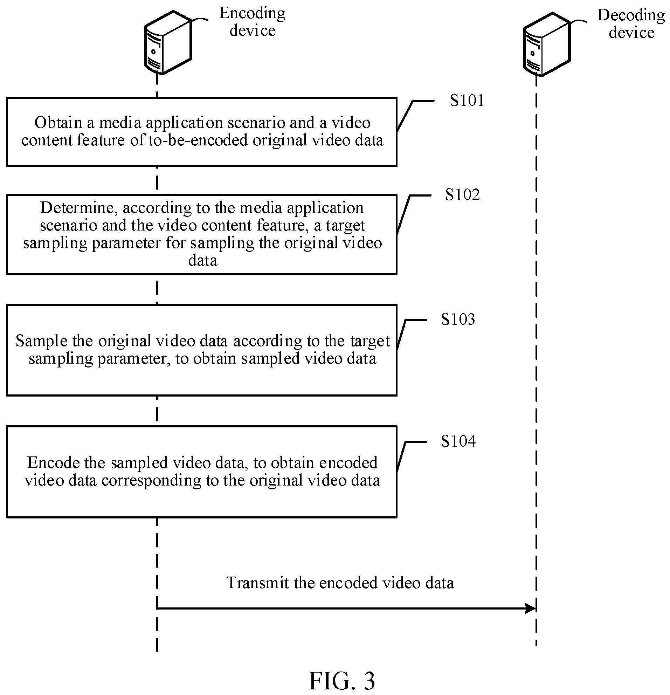

As shown in FIG. 3, FIG. 3 is a schematic flowchart of a video encoding method according to an embodiment of this application. The method may be performed by a computer device. The computer device may be an encoding device. As shown in FIG. 3, the method may specifically include, but not limited to, the following operations.

S101: Obtain a media application scenario and a video content feature of to-be-encoded original video data.

Specifically, after obtaining to-be-encoded original video data, the encoding device may obtain a media application scenario of the original video data. The media application scenario may include a user viewing scenario, a machine recognition scenario, and the like. The user viewing scenario is a scenario in which a target user views video data. The machine recognition scenario may include a scenario in which a machine determines video data and completes a related task (for example, a detection task or a recognition task). Video perceptual features of a target object for video data are different in different media application scenarios, for example, a video perceptual feature of a target user for video data in the user viewing scenario is different from a video perceptual feature of a target machine for the video data in the machine recognition scenario. Therefore, a requirement on quality and a resolution of the video data in the user viewing scenario is different from a requirement on quality and a resolution of the video data in the machine recognition scenario, and different encoding methods may be used in different media application scenarios to meet requirements of corresponding scenarios. The encoding device may also obtain a video content feature of the original video data. The video content feature may include a video content change rate and a video content information amount of the original video data, a video resolution of a video frame in the original video data, a quantity of video frames played in unit time in the original video data, and the like.

S102: Determine, according to the media application scenario and the video content feature, a target sampling parameter for sampling the original video data.

Specifically, the media application scenario may reflect a quality requirement (for example, a content change rate requirement and a resolution requirement) of video data needed by the target object. The video content feature of the original video data may reflect the video content change rate and the video content information amount of the original video data. The encoding device may determine, according to the media application scenario and the video content feature, a target sampling parameter for sampling the original video data. The target sampling parameter may include a target sampling mode and a target sampling rate in the target sampling mode. Specifically, the target sampling mode may include a temporal sampling mode and a spatial sampling mode. The temporal sampling mode is to perform video frame sampling on video data, and the spatial sampling mode is to sample a video resolution of the video data. The target sampling rate in the target sampling mode may include a target sampling rate in the temporal sampling mode and a target sampling rate in the spatial sampling mode. For example, the target sampling rate in the temporal sampling mode may refer to extracting a frame at a rate of 2 (that is, sampling one frame every one frame), extracting a frame at a rate of 3 (that is, sampling one frame every two frames), and the like. For example, the target sampling rate in the spatial sampling mode may be any value greater than 0, for example, 0.5 times (that is, a resolution is reduced by 0.5 times), 0.75 times (that is, a resolution is reduced by 0.75 times), or 2 times (that is, a resolution is reduced by 2 times).

In some embodiments, a specific manner in which the encoding device determines the target sampling parameter for sampling the original video data may include: determining, according to the video content feature, a target sampling mode for sampling the original video data; determining a video perceptual feature of a target object for video data in the media application scenario, where the target object is an object that perceives the original video data; determining a target sampling rate in the target sampling mode according to the video perceptual feature and the video content feature; and determining the target sampling rate and the target sampling mode as the target sampling parameter for sampling the original video data.

Specifically, the encoding device may determine, according to the video content feature, a target sampling mode for sampling the original video data. In this way, the target sampling mode of the original video data can be adaptively determined, and accuracy of sampling the original video data can be improved. The encoding device may determine a video perceptual feature of a target object for video data in the media application scenario of the original video data. The target object is an object that perceives the original video data. The video perceptual feature may be configured for reflecting information such as a quality requirement and a resolution requirement of the target object for the video data. Further, the encoding device may determine a target sampling rate in the target sampling mode according to the video perceptual feature and the video content feature and determine the target sampling rate and the target sampling mode as the target sampling parameter for sampling the original video data. In this way, the target sampling mode and the target sampling rate in the target sampling mode are adaptively determined according to the media application scenario and the video content feature, so that the accuracy of sampling the original video data can be improved, it can be ensured that application (for example, user viewing or machine recognition) of the original video data is not affected when a decoding device restores the original video data according to encoded video data, and a data amount of the encoded video data obtained by encoding the original video data can be further reduced. In other words, after the original video data is sampled by using the target sampling parameter, it can be ensured that the decoding device restores viewing quality of the original video data according to the encoded video data, and the data amount of the encoded video data can be further reduced.

The target sampling mode may include a temporal sampling mode, a spatial sampling mode, and one of the temporal sampling mode and the spatial sampling mode. The temporal sampling mode is to perform frame extraction sampling on the original video data, and the spatial sampling mode is to sample a video resolution of the original video data. A target sampling rate in the temporal sampling mode is a ratio of a quantity of extracted video frames to a quantity of original video frames when frame extraction sampling is performed on the original video data. A target sampling rate in the spatial sampling mode is a ratio of a video resolution obtained through sampling to an original video resolution when the video resolution of the original video data is sampled.

In some embodiments, a specific manner in which the encoding device determines the target sampling mode may include: determining a repetition rate of video content in the original video data according to a video content change rate included in the video content feature; and determining, according to the repetition rate of the video content in the original video data, the target sampling mode for sampling the original video data.

Specifically, the video content feature includes a video content change rate (namely, a change rate of picture content in a video) of the original video data. The video content change rate may be a moving speed of a movable object in video content, a change rate of a pixel in the video content, or the like. The encoding device may determine a repetition rate of video content in the original video data according to the video content change rate of the original video data. The repetition rate may be a repetition rate between any two video frames that are adjacent in a play sequence in the original video data. Further, the encoding device may determine, according to the repetition rate of the video content in the original video data, the target sampling mode for sampling the original video data. For example, when the repetition rate of the video content in the original video data is excessively low, frame extraction sampling is not suitable to be performed on the original video data. If frame extraction sampling is performed on the original video data, a display effect of the original video data restored by the decoding device according to the encoded video data is affected (for example, problems that video content is incoherent, the video content has great jumpy, and the like occur). In this way, the target sampling mode is determined according to the repetition rate of the video content in the original video data, so that accuracy of the target sampling mode can be improved, thereby ensuring that the display effect of the original video data restored by the decoding device according to the encoded video data is not affected, and a data amount of the encoded video data obtained by encoding the original video data can be reduced.

In some embodiments, a specific manner in which the encoding device determines the target sampling mode according to the repetition rate may include: if the repetition rate of the video content in the original video data is greater than a first repetition rate threshold, determining a temporal sampling mode and a spatial sampling mode as the target sampling mode for sampling the original video data; if the repetition rate of the video content in the original video data is less than or equal to the first repetition rate threshold and greater than a second repetition rate threshold, determining the temporal sampling mode as the target sampling mode for sampling the original video data, where the second repetition rate threshold is less than the first repetition rate threshold; and if the repetition rate of the video content in the original video data is less than or equal to the second repetition rate threshold, determining the spatial sampling mode as the target sampling mode for sampling the original video data. The first repetition rate threshold and the second repetition rate threshold may be set according to a perception requirement of the target object or may be set according to a specific situation. The first repetition rate threshold and the second repetition rate threshold are not limited in this embodiment of this application.

Specifically, if the encoding device determines that the repetition rate of the video content in the original video data is greater than a first repetition rate threshold, temporal sampling and spatial sampling on the original video data do not affect a display effect of the sampled video data obtained through sampling. Therefore, the temporal sampling mode and the spatial sampling mode may be determined as the target sampling mode for sampling the original video data. In this way, the data amount of the encoded video data obtained by encoding the original video data can be greatly reduced. Specifically, if the encoding device determines that the repetition rate of the video content in the original video data is less than or equal to the first repetition rate threshold and greater than a second repetition rate threshold, the encoding device may determine the temporal sampling mode as the target sampling mode for sampling the original video data. The second repetition rate threshold is less than the first repetition rate threshold. In this way, the original video data is sampled by using only the temporal sampling mode, so that the data amount of the encoded video data of the original video data can be reduced, and a case in which temporal sampling is performed on the original video data by using the temporal sampling mode and the spatial sampling mode, a large amount of information about the sampled video data obtained through sampling is lost, and the display effect of the original video data restored according to the sampled video data obtained through sampling is further affected can be avoided.

Certainly, if the encoding device determines that the repetition rate of the video content in the original video data is less than or equal to the first repetition rate threshold and greater than the second repetition rate threshold, the encoding device may alternatively determine the spatial sampling mode as the target sampling mode for sampling the original video data. In other words, if the repetition rate of the video content in the original video data is less than or equal to the first repetition rate threshold and greater than the second repetition rate threshold, any one of the temporal sampling mode and the spatial sampling mode may be used as the target sampling mode for sampling the original video data. Specifically, if the encoding device determines that the repetition rate of the video content in the original video data is less than or equal to the second repetition rate threshold, a large amount of information is lost if the original video data is sampled by using the temporal sampling mode, so that the spatial sampling mode may be determined as the target sampling mode for sampling the original video data. In this way, a suitable target sampling mode can be determined according to the repetition rate of the video content in the original video data, thereby improving sampling accuracy. Certainly, the manner in which the encoding device determines the target sampling mode according to the repetition rate is applicable to a video frame in the original video data. For example, a target sampling mode for sampling a current video frame is determined according to a repetition rate between the current video frame and a reference video frame (which may be a video frame whose play sequence is a previous frame of the current video frame, or a video frame whose play sequence is a next frame of the current video frame) in the original video data.

In some embodiments, a specific manner in which the encoding device determines the target sampling mode may further include: determining complexity of video content in the original video data according to a video content information amount included in the video content feature; and determining, according to the complexity of the video content in the original video data, the target sampling mode for sampling the original video data.

In some embodiments, the video content feature of the original video data includes a video content information amount. The video content information amount may reflect complexity of content in the original video data, that is, a larger video content information amount of the original video data indicates more complex video content. A smaller video content information amount of the original video data indicates simpler video content. For example, more scenes and pictures involved in the video content indicate a larger amount of information included in the video content. For example, a video picture of a sports field may include a plurality of person scenes, and a video content information amount is high. A video picture of a single scene such as a sea or a lake includes relatively single elements, and a video content information amount is low. For another example, both a video A and a video B include texts. If a text font is smaller and a text amount is larger in the video A than in the video B, a video content information amount of the video A is higher. The encoding device may determine complexity of video content in the original video data according to the video content information amount included in the video content feature of the original video data. Further, the encoding device may determine, according to the complexity of the video content in the original video data, the target sampling mode for sampling the original video data. For example, if the complexity of the video content in the original video data is relatively high, key information of the original video data may be lost due to use of the spatial sampling mode, resulting in confused video content in the sampled video data obtained through sampling. Therefore, the spatial sampling mode is not suitable to be configured for sampling the original video data. In this way, the target sampling mode for sampling the original video data is determined according to the complexity of the video content in the original video data, so that a suitable target sampling mode can be determined, thereby improving sampling accuracy. Certainly, the manner in which the encoding device determines the target sampling mode according to the complexity is applicable to a video frame in the original video data. For example, a target sampling mode for sampling a current video frame is determined according to complexity of the current video frame in the original video data.

In some embodiments, a specific manner in which the encoding device determines the target sampling mode according to the complexity may include: if the complexity of the video content in the original video data is greater than a first complexity threshold, determining a temporal sampling mode and a spatial sampling mode as the target sampling mode for sampling the original video data; if the complexity of the video content in the original video data is greater than or equal to the first complexity threshold and less than a second complexity threshold, determining the spatial sampling mode as the target sampling mode for sampling the original video data, where the second complexity threshold is greater than the first complexity threshold; if the complexity of the video content in the original video data is greater than the second complexity threshold, determining the temporal sampling mode as the target sampling mode for sampling the original video data. The first complexity threshold and the second complexity threshold may be set according to a perception requirement of the target object or may be set according to a specific situation. The first complexity threshold and the second complexity threshold are not limited in this embodiment of this application.

Specifically, if the encoding device determines that the complexity of the video content in the original video data is less than the first complexity threshold, the video content in the original video data is relatively simple, and the original video data may be sampled by using the temporal sampling mode and the spatial sampling mode, without affecting the display effect of the original video data restored by the decoding device according to the sampled video data obtained through sampling. In addition, the data amount of the encoded video data can also be greatly reduced. If the complexity of the video content in the original video data is greater than or equal to the first complexity threshold and less than the second complexity threshold, the spatial sampling mode is determined as the target sampling mode for sampling the original video data. The second complexity threshold is greater than the first complexity threshold. In this way, the original video data is sampled by using only the spatial sampling mode, so that the data amount of the encoded video data corresponding to the original video data can be reduced, and a case in which after temporal sampling is performed on the original video data by using the temporal sampling mode and the spatial sampling mode, a large amount of information about the sampled video data obtained through sampling is lost, and the display effect of the original video data restored according to the sampled video data obtained through sampling is affected can be avoided.

Certainly, if the complexity of the video content in the original video data is greater than or equal to the first complexity threshold and less than the second complexity threshold, the temporal sampling mode may alternatively be determined as the target sampling mode for sampling the original video data. In other words, if the complexity of the video content in the original video data is greater than or equal to the first complexity threshold and less than the second complexity threshold, any one of the temporal sampling mode and the spatial sampling mode may be used as the target sampling mode for sampling the original video data. Further, if the complexity of the video content in the original video data is greater than the second complexity threshold, the complexity of the video content in the original video data is relatively high, key information of the original video data may be lost due to use of the spatial sampling mode, resulting in confused video content in the sampled video data obtained through sampling. Therefore, the spatial sampling mode is not suitable to be configured for sampling the original video data, and the temporal sampling mode may be determined as the target sampling mode for sampling the original video data.

In some embodiments, a specific manner in which the encoding device determines the target sampling mode may include: The encoding device may determine a repetition rate of video content in the original video data according to a video content change rate included in the video content feature, and determine complexity of video content in the original video data according to a video content information amount included in the video content feature. Further, the encoding device may determine, according to the repetition rate of the video content in the original video data and the complexity of the video content in the original video data, the target sampling mode for sampling the original video data. The encoding device may detect, according to the repetition rate of the video content in the original video data, whether to sample the original video data by using the temporal sampling mode, and detect, according to the complexity of the video content in the original video data, whether to sample the original video data by using the spatial sampling mode. Specifically, if the repetition rate of the video content in the original video data is greater than a third repetition rate threshold, the temporal sampling mode is used as the target sampling mode for sampling the original video data. If the repetition rate of the video content in the original video data is less than or equal to the third repetition rate threshold, the temporal sampling mode is prohibited from being used as the target sampling mode for sampling the original video data. If the complexity of the video content in the original video data is less than a third complexity threshold, the spatial sampling mode is used as the target sampling mode for sampling the original video data. If the complexity of the video content in the original video data is greater than or equal to the third complexity threshold, the temporal sampling mode is prohibited from being used as the target sampling mode for sampling the original video data. The third repetition rate threshold may be set according to a perception requirement of the target object or may be set according to a specific situation. The third repetition rate threshold is not limited in this embodiment of this application. The third complexity threshold may be set according to a perception requirement of the target object or may be set according to a specific situation. The third complexity threshold is not limited in this embodiment of this application.

In some embodiments, a specific manner in which the encoding device determines the target sampling rate in the target sampling mode may include: if the target sampling mode is a temporal sampling mode, determining, according to the video perceptual feature, a limited quantity of video frames that correspond to the video data and that are perceived by the target object in unit time; and determining a target sampling rate in the temporal sampling mode according to a ratio of the limited quantity of video frames to a quantity of played video frames, where the quantity of played video frames represents a quantity of video frames that are played in the unit time in the original video data and that are indicated by the video content feature.

Specifically, if the encoding device determines to sample the original video data by using the temporal sampling mode, the encoding device may determine, according to the video perceptual feature, a limited quantity of video frames of the video data that are perceived by the target object in unit time. The unit time may be per second, per minute, or the like. A quantity of video frames that can be perceived by a user or a machine in unit time is limited. For example, a video frame rate that can be perceived by eyes of the user is 55 frames/second. Human eyes cannot see a difference between a video whose frame rate exceeds 55 frames/second and a video whose frame rate is 55 frames/second. Only when the frame rate is excessively small, the human eyes can find a problem that a picture of a video whose frame rate is excessively small is not smooth. Because different objects have different video perceptual features, limited quantities of video frames corresponding to different objects are different. The limited quantity of video frames of the video data that are perceived by the target object in the unit time may be less than or equal to a video frame rate that can be perceived by the target object. The limited quantity of video frames may be a minimum quantity of frames that meet a perception requirement of the target object. Specifically, the encoding device may determine, according to the video perceptual feature and the video content feature of the original video data, the limited quantity of video frames of the video data that are perceived by the target object in the unit time. After original video data is sampled according to the limited quantity of video frames to obtain sampled video data, the original video data whose both video quality and resolution meet the perception requirement of the target object may be restored according to the sampled video data.

Further, a quantity of played video frames represents a quantity of video frames that are played in the unit time in the original video data and that are indicated by the video content feature. The encoding device may determine a target sampling rate in the temporal sampling mode according to a ratio of the limited quantity of video frames to the quantity of video frames that are played in the unit time in the original video data and that are indicated by the video content feature. Specifically, a sampling rate for sampling a video frame needs to be a positive integer. Therefore, the encoding device may obtain a ratio of the limited quantity of video frames to the quantity of video frames that are played in the unit time in the original video data and that are indicated by the video content feature, and if the ratio is a positive integer, the ratio is determined as the target sampling rate in the temporal sampling mode. If the ratio is not a positive integer, rounding processing is performed on the ratio, to obtain a rounded ratio, and the rounded ratio is determined as the target sampling rate in the temporal sampling mode. In this way, limited quantities of video frames that can be perceived by different target objects are different, and the target sampling rate in the temporal sampling mode is adaptively determined according to the limited quantity of video frames corresponding to the target object, so that when the original video data is restored according to the sampled video data obtained through sampling, quality and a resolution of the restored original video data can meet the perception requirement of the target object.

In some embodiments, a specific manner in which the encoding device determines the target sampling rate in the target sampling mode according to the video perceptual feature and the video content feature may include: if the target sampling mode is a spatial sampling mode, determining, according to the video perceptual feature, a limited video resolution associated with the target object; and determining a ratio of the limited video resolution to a video frame resolution as a target sampling rate in the spatial sampling mode, where the video frame resolution represents a video resolution that is of a video frame in the original video data and that is indicated by the video content feature.

Specifically, if the target sampling mode is a spatial sampling mode, the encoding device may determine, according to the video perceptual feature, a limited video resolution associated with the target object. Limited video resolutions associated with different target objects are different. The limited video resolution may be a lowest resolution that meets the perception requirement of the target object. For example, a video resolution needed by a user (namely, human eyes) when viewing video data and a video resolution needed by a machine when processing a recognition task are different. Because the user needs a rich display effect when viewing the video data, a needed video resolution is relatively high. When processing the recognition task, the machine only needs to recognize related information of a to-be-recognized object, so that a needed video resolution is relatively low. Further, a video frame resolution represents a video resolution that is of a video frame in the original video data and that is indicated by the video content feature. The encoding device may determine a ratio of the limited video resolution to the video resolution that is of the video frame in the original video data and that is indicated by the video content feature as a target sampling rate in the spatial sampling mode. In this way, limited video resolutions needed by different target objects are different, and the target sampling rate in the spatial sampling mode is adaptively determined according to the limited video resolution of the target object, so that when the original video data is restored according to the sampled video data obtained through sampling, quality and a resolution of the restored original video data can meet the perception requirement of the target object.

In some embodiments, a specific manner in which the encoding device determines the target sampling rate in the target sampling mode according to the video perceptual feature and the video content feature may include: if the target sampling mode is a temporal sampling mode and a spatial sampling mode, determining, according to the video perceptual feature, a limited quantity of video frames that correspond to the video data and that are perceived by the target object in unit time, and determining a limited video resolution associated with the target object; determining a target sampling rate in the temporal sampling mode according to a ratio of the limited quantity of video frames to a quantity of played video frames, where the quantity of played video frames represents a quantity of video frames that are played in the unit time in the original video data and that are indicated by the video content feature; and determining a ratio of the limited video resolution to a video frame resolution as a target sampling rate in the spatial sampling mode, where the video frame resolution represents a video resolution that is of a video frame in the original video data and that is indicated by the video content feature.

Specifically, if the target sampling mode is a temporal sampling mode and a spatial sampling mode, the encoding device may determine, according to the video perceptual feature, a limited quantity of video frames of video data that are perceived by the target object in unit time. Because different objects have different video perceptual features, limited quantities of video frames corresponding to different objects are different. Further, the encoding device may determine a target sampling rate in the temporal sampling mode according to a ratio of the limited quantity of video frames to a quantity of video frames that are played in the unit time in the original video data and that are indicated by the video content feature. Specifically, a sampling rate for sampling a video frame needs to be a positive integer. Therefore, the encoding device may obtain a ratio of the limited quantity of video frames to the quantity of video frames that are played in the unit time in the original video data and that are indicated by the video content feature, and if the ratio is a positive integer, the ratio is determined as the target sampling rate in the temporal sampling mode. If the ratio is not a positive integer, rounding processing is performed on the ratio, to obtain a rounded ratio, and the rounded ratio is determined as the target sampling rate in the temporal sampling mode. In this way, limited quantities of video frames that can be perceived by different target objects are different, and the target sampling rate in the temporal sampling mode is adaptively determined according to the limited quantity of video frames corresponding to the target object, so that when the original video data is restored according to the sampled video data obtained through sampling, quality and a resolution of the restored original video data can meet the perception requirement of the target object.

Further, the encoding device may determine, according to the video perceptual feature, a limited video resolution associated with the target object. Limited video resolutions associated with different target objects are different. The limited video resolution may be a lowest resolution that meets the perception requirement of the target object. The encoding device may determine a ratio of the limited video resolution to a video resolution that is of a video frame in the original video data and that is indicated by the video content feature as the target sampling rate in the spatial sampling mode. In this way, limited video resolutions needed by different target objects are different, and the target sampling rate in the spatial sampling mode is adaptively determined according to the limited video resolution of the target object, so that when the original video data is restored according to the sampled video data obtained through sampling, quality and a resolution of the restored original video data can meet the perception requirement of the target object.

S103: Sample the original video data according to the target sampling parameter, to obtain sampled video data.

Specifically, the encoding device may sample the original video data according to the target sampling parameter, to obtain sampled video data. The target sampling parameter includes the target sampling mode and the target sampling rate in the target sampling mode. The encoding device may sample the original video data according to the target sampling mode and the target sampling rate in the target sampling mode, to obtain the sampled video data. In this way, the original video data is sampled, to obtain the sampled video data, and the sampled video data is encoded subsequently, to obtain encoded video data corresponding to the original video data, so that a data amount of the encoded video data can be reduced, thereby improving transmission efficiency of the encoded video data and reducing storage space of the encoded video data.

In some embodiments, a specific manner in which the encoding device samples the original video data according to the target sampling parameter, to obtain the sampled video data may include: if the target sampling mode is a temporal sampling mode, obtaining a play sequence number of a video frame in the original video data and a total video frame quantity of video frames included in the original video data; determining, according to a target sampling rate in the temporal sampling mode and the total video frame quantity, a quantity of to-be-extracted video frames in the original video data as a first video frame quantity; and extracting the first video frame quantity of video frames from the original video data according to the play sequence number of the video frame in the original video data as the sampled video data.

Specifically, if the target sampling mode is a temporal sampling mode, the encoding device may obtain a play sequence number of a video frame in the original video data and a total video frame quantity of video frames included in the original video data. The encoding device determines, according to a target sampling rate in the temporal sampling mode and the total video frame quantity, a quantity of to-be-extracted video frames in the original video data as a first video frame quantity. Specifically, the encoding device may obtain a ratio of the total video frame quantity to the target sampling rate in the temporal sampling mode (that is, the total video frame quantity/the target sampling rate in the temporal sampling mode) and use the ratio as the first video frame quantity. For example, the total video frame quantity of video frames included in the original video data is 100 frames, and the target sampling rate in the temporal sampling mode is 2, so that the first video frame quantity is 100/2=50. Further, the encoding device may extract the first video frame quantity of video frames from the original video data according to the play sequence number of the video frame in the original video data as the sampled video data.

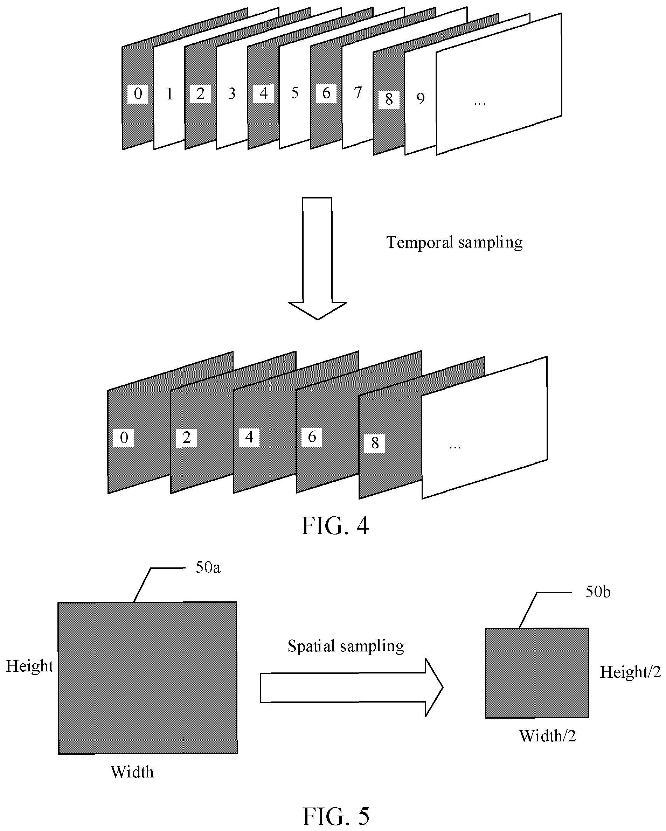

Specifically, the encoding device may extract video frames from the original video data at intervals according to the play sequence number of the video frame in the original video data and the target sampling rate in the temporal sampling mode and use the extracted video frames as the sampled video data. As shown in FIG. 4, FIG. 4 is a schematic diagram of a temporal sampling mode according to an embodiment of this application. As shown in FIG. 4, the total video frame quantity of video frames included in the original video data is 10 frames, the target sampling rate in the temporal sampling mode is 2, and the original video data includes a video frame 0, a video frame 1, a video frame 2, a video frame 3, a video frame 4, a video frame 5, a video frame 6, a video frame 7, a video frame 8, a video frame 9, and the like. The encoding device may extract one video frame every one video frame from the original video data, that is, extract the video frame 0, the video frame 2, the video frame 4, the video frame 6, the video frame 8, and the like as the sampled video data. In other words, the video frame 0, the video frame 1, the video frame 2, the video frame 3, the video frame 4, the video frame 5, the video frame 6, the video frame 7, the video frame 8, the video frame 9, and the like included in the original video data are sampled at a rate of 2 in the temporal sampling mode, to obtain the sampled video data, that is, the video frame 0, the video frame 2, the video frame 4, the video frame 6, the video frame 8, and the like.

In some embodiments, after the encoding device samples the original video data by using the temporal sampling mode and the target sampling rate in the temporal sampling mode, to obtain the sampled video data, to ensure that the decoding device can restore the total video frame quantity of the original video data, the encoding device may transmit the total video frame quantity and the target sampling rate in the temporal sampling mode to the decoding device. The decoding device is configured to perform sampling restoration on the sampled video data corresponding to the encoded video data according to the total video frame quantity and the target sampling rate in the temporal sampling mode, to restore a quantity of frames in the original video data.

In some embodiments, when the encoding device samples the original video data by using the temporal sampling mode, to ensure that the decoding device can restore the total video frame quantity of the original video data, the encoding device may transmit a tail dropped frame quantity after sampling and the target sampling rate in the temporal sampling mode to the decoding device. The decoding device is configured to perform sampling restoration on the sampled video data corresponding to the encoded video data according to the tail dropped frame quantity and the target sampling rate in the temporal sampling mode, to restore a quantity of frames in the original video data. The quantity tail dropped frame may be a quantity of tail dropped video frames after temporal sampling is performed on the original video data.

Specifically, when the encoding device transmits the tail dropped frame quantity after sampling and the target sampling rate in the temporal sampling mode to the decoding device, TemporalScaleFlag (a temporal sampling flag), TemporalRatio (a target sampling rate flag in the temporal sampling mode), and DroppedFrameNumber (a tail dropped frame quantity flag) may be generated. A value of TemporalScaleFlag may be 0 or 1. When the value of TemporalScaleFlag is 1, the encoding device samples the original video data by using the temporal sampling mode. When the value of TemporalScaleFlag is 0, the encoding device samples the original video data without using the temporal sampling mode. When the value of TemporalScaleFlag is 1, TemporalRatio may be set to the target sampling rate in the temporal sampling mode, for example a value of TemporalRatio may be 2, 3, 4, or the like. When the value of TemporalScaleFlag is 1, DroppedFrameNumber may be set to a quantity of tail dropped video frames after temporal sampling is performed on the original video data. For example, after the video frame 0, the video frame 1, the video frame 2, the video frame 3, the video frame 4, the video frame 5, the video frame 6, the video frame 7, the video frame 8, and the video frame 9 included in the original video data are sampled by using the temporal sampling mode and the target sampling rate of 2 in the temporal sampling mode, the quantity of tail dropped video frames is 1 (that is, the video frame 9 is tail dropped). The original video data is sampled based on the play sequence number of the video frame in the original video data and the first video frame quantity determined according to the total video frame quantity and the target sampling rate, so that omission and deviation can be avoided, thereby ensuring accuracy of sampling the video frames.

In some embodiments, a specific manner in which the encoding device samples the original video data according to the target sampling parameter, to obtain the sampled video data may include: if the target sampling mode is a spatial sampling mode, obtaining an original video resolution of a video frame $M_i$ in the original video data, where i is a positive integer less than or equal to M, and M is a quantity of video frames in the original video data; performing resolution conversion on the video frame $M_i$ having the original video resolution according to a target sampling rate in the spatial sampling mode and the original video resolution of the video frame $M_i$, to obtain a video frame $M_i$ having a target video resolution; and after performing resolution sampling on all video frames in the original video data, determining original video data obtained through resolution conversion as the sampled video data.

Specifically, if the target sampling mode is a spatial sampling mode, the encoding device may obtain an original video resolution of a video frame $M_i$ in the original video data. The original video resolution may be configured for reflecting a quantity of pixels in the original video data. Specifically, if the original video resolution of the video frame $M_i$ in the original video data is higher, more pixels are included in the video frame $M_i$, and the video frame $M_i$ are clearer. If the original video resolution of the video frame $M_i$ in the original video data is lower, less pixels are included in the video frame $M_i$, and the video frame $M_i$ are more blurred. For example, pixels included in a video frame whose video resolution is 1920* 1080 are greater than pixels included in a video frame whose video resolution is 720*480, but a data amount obtained by encoding the video frame whose video resolution is 1920* 1080 is greater than a data amount obtained by encoding the video frame whose video resolution is 720*480. M is a quantity of video frames in the original video data, and M is a positive integer. For example, M may be 1, 2, 3, ..., and i may be a positive integer less than or equal to M.

Further, the encoding device may perform resolution conversion on the video frame $M_i$ having the original video resolution according to a target sampling rate in the spatial sampling mode and the original video resolution of the video frame $M_i$, to obtain a video frame $M_i$ having a target video resolution. After performing resolution sampling on all video frames in the original video data, the encoding device determines original video data obtained through resolution conversion as the sampled video data. In this way, a video resolution of the original video data is sampled by using the spatial sampling mode and the target sampling rate in the spatial sampling mode, so that it can be ensured that the perception requirement of the target object is met, and the data amount of the encoded video data corresponding to the original video data can also be reduced, thereby improving transmission efficiency of the encoded video data. Therefore, the decoding device can rapidly obtain the encoded video data and decode the encoded video data, to improve decoding efficiency.

Specifically, the encoding device may perform resolution conversion on the video frame $M_i$ having the original video resolution by using any spatial sampling method of a nearest neighbor interpolation method, a re-sampling filtering method, a bilinear interpolation method, and a sampling model prediction method (for example, a video super-resolution neural network or an image super-resolution neural network), to obtain a video frame $M_i$ having a target video resolution.

The video frame $M_i$ having the original video resolution includes Q original pixels and pixel values respectively corresponding to the Q original pixels, where Q is a positive integer. A specific manner in which the encoding device may perform resolution conversion on the video frame $M_i$ having the original video resolution by using the nearest neighbor interpolation method, to obtain the video frame $M_i$ having the target video resolution may include: using a product of the target sampling rate in the spatial sampling mode and the original video resolution as an initial video resolution. The initial video resolution includes P sampling pixels, where P is a positive integer. Further, the encoding device may determine a reference pixel corresponding to a sampling pixel $P_j$ in the Q original pixels, where the sampling pixel $P_j$ belongs to the P sampling pixels, and j is a positive integer less than or equal to P. A pixel value of the reference pixel is used as a pixel value of the sampling pixel $P_j$. When pixel values respectively corresponding to the P sampling pixels are obtained, a video frame $M_i$ having the initial video resolution is generated according to the P sampling pixels and the pixel values respectively corresponding to the P sampling pixels.

In some embodiments, a specific manner in which the encoding device obtains the video frame $M_i$ having the target video resolution may include: using a product of the target sampling rate in the spatial sampling mode and the original video resolution of the video frame $M_i$ as an initial video resolution; performing resolution conversion on the video frame $M_i$ having the original video resolution, to obtain a video frame $M_i$ having the initial video resolution; if the video frame $M_i$ having the initial video resolution does not meet an encoding condition, performing pixel padding on the video frame $M_i$ having the initial video resolution, determining a video resolution of a video frame $M_i$ obtained through padding as the target video resolution, and determining the video frame $M_i$ obtained through padding as the video frame $M_i$ having the target video resolution; and if the video frame $M_i$ having the initial video resolution meets the encoding condition, determining the initial video resolution as the target video resolution, and determining the video frame $M_i$ having the initial video resolution as the video frame $M_i$ having the target video resolution.

Specifically, the encoding device may use a product of the target sampling rate in the spatial sampling mode and the original video resolution of the video frame $M_i$ as an initial video resolution. Further, resolution conversion is performed on the video frame $M_i$ having the original video resolution, to obtain a video frame $M_i$ having the initial video resolution. The encoding device may denote the original video resolution of the video frame $M_i$ as width*height (namely, width*height), and denote the target sampling rate in the spatial sampling mode as q, so that the initial video resolution is width*q*height*q. As shown in FIG. 5, FIG. 5 is a schematic diagram of a spatial sampling mode according to an embodiment of this application. As shown in FIG. 5, the target sampling rate in the spatial sampling mode is denoted as 1/2. When an original video resolution of a video frame 50a is width*height, the encoding device may use a product of 1/2 sampling rate in the spatial sampling mode and the original video resolution of the video frame 50a as an initial video resolution width/2*height/2. Further, the encoding device may perform resolution conversion on the video frame 50a having the original video resolution by using any spatial sampling method of a nearest neighbor interpolation method, a re-sampling filtering method, a bilinear interpolation method, and a sampling model prediction method, to obtain a video frame 50b having the initial video resolution width/2*height/2. Because an encoder in the encoding device can encode only a video frame in a fixed resolution format, the encoding device may detect whether the video frame $M_i$ having the initial video resolution meets an encoding condition. The encoding condition may be that a resolution is a multiple of 8, that is, in the video resolution, a width is a multiple of 8, and a height is a multiple of 8. For example, when the initial video resolution of the video frame $M_i$ is 720*480, 720 is a multiple of 8, and 480 is a multiple of 8. Therefore, the encoding device may determine that the video frame $M_i$ having the initial video resolution meets the encoding condition. When the initial video resolution of the video frame $M_i$ is 727*483, 727 is not a multiple of 8, and 483 is not a multiple of 8. Therefore, the encoding device may determine that the video frame $M_i$ having the initial video resolution does not meet the encoding condition.

Further, if the encoding device determines that the video frame $M_i$ having the initial video resolution does not meet the encoding condition, the encoding device may perform pixel padding on the video frame $M_i$ having the initial video resolution, and pad the initial video resolution into a video resolution meeting the encoding condition, to obtain a video frame $M_i$ obtained through padding. The encoding device may determine a video resolution of the video frame $M_i$ obtained through padding as the target video resolution, and determine the video frame $M_i$ obtained through padding as the video frame $M_i$ having the target video resolution. Specifically, when performing pixel padding on the video frame $M_i$ having the initial video resolution, the encoding device may obtain a video resolution that meets the encoding condition and that has a smallest difference from the initial video resolution and use the video resolution as the target video resolution. For example, when the initial video resolution of the video frame $M_i$ is 717*479, it may be determined that a difference between the video resolution 720*480 and the initial video resolution 717*479 is smallest. Therefore, pixel padding may be performed on the video frame $M_i$ having the resolution 717*479, to obtain the video frame $M_i$ having the resolution 720*480.

Specifically, the encoding device may perform pixel padding on the video frame $M_i$ by using a target pixel value. The target pixel value may be any pixel value, for example, the target pixel value may be 0, 255, or the like. The target pixel value is not limited in this embodiment of this application. For example, the encoding device may pad a horizontal direction (namely, a width direction) of the initial video resolution with three pixels whose pixel values are 0, and pad a vertical direction (namely, a height direction) of the initial video resolution with one pixel whose pixel value is 0, to obtain the video frame $M_i$ whose video resolution is 720*480 and that is obtained through padding. If the video frame $M_i$ having the initial

video resolution meets the encoding condition, the initial video resolution is determined as the target video resolution, and the video frame $M_i$ having the initial video resolution is determined as the video frame $M_i$ having the target video resolution.

In some embodiments, after the encoding device samples the original video data by using the spatial sampling mode, if the video frame $M_i$ having the target video resolution is obtained through pixel padding, pixel padding location information for pixel padding in the video frame $M_i$ having the target video resolution is obtained, and the target sampling rate in the spatial sampling mode and the pixel padding location information are transmitted to the decoding device. The decoding device is configured to perform, according to the target sampling rate in the spatial sampling mode and the pixel padding location information, sampling restoration on the sampled video data obtained by decoding the encoded video data, to restore the original video data. If the video frame $M_i$ having the target video resolution is not obtained through pixel padding, the target sampling rate in the spatial sampling mode is transmitted to the decoding device. The decoding device is configured to perform sampling restoration on the sampled video data corresponding to the encoded video data according to the target sampling rate in the spatial sampling mode, to restore the original video data.

Specifically, the encoding device may generate SpatialScaleFlag (a spatial sampling flag), SpatialScaleRatio (a target sampling rate flag in the spatial sampling mode), PaddingFlag (a pixel padding flag), PaddingX (a pixel value padded in a horizontal direction, that is, a width), and PaddingY (a pixel value padded in a vertical direction, that is, a height). A value of SpatialScaleFlag may be 0 or 1. When the value of SpatialScaleFlag is 1, the encoding device samples the original video data by using the spatial sampling mode. When the value of SpatialScaleFlag is 0, the encoding device samples the original video data without using the spatial sampling mode. When the value of SpatialScaleFlag is 1, SpatialScaleRatio may be set to the target sampling rate in the spatial sampling mode, for example, a value of SpatialScaleRatio may be any value greater than 0 such as 0.5, 0.75, or 2. When the value of SpatialScaleFlag is 1, a value of PaddingFlag may be set to 0 or 1. When the value of PaddingFlag is 1, there is a pixel padding operation in a spatial sampling process of the original video data (that is, the video frame $M_i$ having the target video resolution is obtained through pixel padding). When the value of PaddingFlag is 0, there is no pixel padding operation in the spatial sampling process of the original video data (that is, the video frame $M_i$ having the target video resolution is not obtained through pixel padding). Further, when the value of PaddingFlag is 1, the encoding device may set PaddingX (the pixel value padded in the horizontal direction) and PaddingY (the pixel value padded in the vertical direction).

In this embodiment, an initial video resolution is determined, and a video frame that has the initial video resolution and that does not meet the encoding condition is padded, to determine a target video resolution. For a video frame that has the initial video resolution and that meets the encoding condition, the target video resolution is directly determined, which helps reduce a data amount of the encoded video data corresponding to the original video data, so as to improve transmission efficiency of the encoded video data, so that the decoding device can rapidly obtain the encoded video data and decode the encoded video data, to improve decoding efficiency.

In some embodiments, a specific manner in which the encoding device samples the original video data may include: if the target sampling mode is a temporal sampling mode and a spatial sampling mode, determining a quantity of to-be-extracted video frames in the original video data as a second video frame quantity according to a target sampling rate in the temporal sampling mode and a total video frame quantity in the original video data; extracting the second video frame quantity of video frames from the original video data according to a play sequence number of a video frame in the original video data as initial sampled video data; obtaining an original video resolution of a video frame $N_j$ in the initial sampled video data, where j is a positive integer less than or equal to N, and N is a quantity of video frames in the initial sampled video data; performing resolution conversion on the video frame $N_j$ having the original video resolution according to a target sampling rate in the spatial sampling mode and the original video resolution of the video frame $N_j$, to obtain a video frame $N_j$ having a target video resolution; and after performing resolution sampling on all video frames in the initial sampled video data, determining initial sampled video data obtained through resolution sampling as the sampled video data. For specific content, refer to the content when the target sampling mode is the temporal sampling mode and the target sampling mode is the spatial sampling mode. Details are not described in this embodiment of this application. The original video data is sampled by using the target sampling mode in which the temporal sampling mode is combined with the spatial sampling mode, so that accuracy of sampling the original video data can be improved, video watching quality can be ensured, and redundancy of the encoded video data can be effectively reduced.

When the target sampling mode is the temporal sampling mode and the spatial sampling mode, the encoding device may transmit the total video frame quantity in the original video data and the target sampling rate in the temporal sampling mode to the decoding device. In addition, if the video frame $N_j$ having the target video resolution is obtained through pixel padding, the encoding device needs to transmit the target sampling rate in the spatial sampling mode and pixel padding location information in the video frame $N_j$ having the target video resolution to the decoding device. If the video frame $N_j$ having the target video resolution is not obtained through pixel padding, the encoding device needs to transmit the target sampling rate in the spatial sampling mode to the decoding device, so that the decoding device restores a quantity of video frames and a video resolution of the original video data.

S104: Encode the sampled video data, to obtain encoded video data corresponding to the original video data.

Specifically, the encoding device may predict the sampled video data in a prediction mode such as intra-frame prediction or inter-frame prediction, to obtain a residual video signal of the sampled video data. Further, the encoding device may transform the residual video signal of the sampled video data, to obtain a transform domain signal of the sampled video data, and quantize the transform domain signal of the sampled video data, to obtain a quantized transform domain signal. Further, the encoding device may perform entropy coding on the quantized transform domain signal and output binarized (0 or 1) encoded video data. Certainly, the encoding device may alternatively perform entropy coding on parameters such as the target sampling parameter, the total video frame quantity of the original video data, and the pixel padding location information, to reduce a bit rate. In this embodiment of this application, the sampled video data may be encoded, so that the bit rate of the encoded video data can be reduced and the transmission efficiency of the encoded video data can be improved, thereby reducing storage space of the encoded video data.

In some embodiments, the encoding device may determine key video region information (for example, a region of interest ROI) of the original video data, and transmit the key video region information and the encoded video data to the decoding device. The key video region information is configured for indicating the decoding device to perform image enhancement processing on a key video region in the original video data. In this way, the decoding device performs image enhancement processing on the key video region in the original video data, to enrich a display effect of the original video data restored by the decoding device, so as to improve accuracy of restoring the original video data. In addition, when an object recognition task is performed on the restored original video data subsequently, recognition accuracy can be improved.

In some embodiments, a specific manner in which the encoding device determines the key video region information of the original video data may include: inputting the original video data into a target detection model, and performing embedding vector conversion on the original video data by using an embedding layer in the target detection model, to obtain a media embedding vector of the original video data; performing object extraction on the media embedding vector by using an object extraction layer in the target detection model, to obtain a video object in the original video data; and determining a region to which the video object belongs in the original video data as a key video region, and generating the key video region information for describing a location of the key video region in the original video data. Certainly, the encoding device may alternatively extract a key video region in the original video data in another key video region determining mode (for example, target detection or target recognition). This is not limited in this embodiment of this application. Specifically, the encoding device may generate ROINumber (a region quantity flag) and ROIInformation (a region feature information flag, for example, region coordinate information) after extracting the key video region in the original video data. ROINumber is configured for indicating a quantity of key video regions in current original video data or a current video frame. When ROINumber is greater than 0, ROIInformation whose quantity is ROINumber is transferred. ROIInformation is configured for indicating information about the key video region (that is, the region of interest), for example, coordinates and a type of a video object included in the key video region. As shown in Table 1, after performing temporal sampling and spatial sampling on the original video data, the encoding device may transmit parameters in Table 1, so that the decoding device restores the original video data according to the parameters in Table 1.

Table 1

| Parameter | Data type | Description |
|---|---|---|
| SpatialScaleFlag | bool | SpatialScaleFlag indicates whether spatial re-sampling is performed on the video. When a value of the field is 1, spatial sampling is performed on the video, and when the value is 0, spatial sampling is not performed on the video. |
| SpatialScaleRatio | float | SpatialScaleRatio indicates a spatial sampling rate. |
| PaddingFlag | bool | PaddingFlag indicates whether a pixel padding operation is performed on the video when spatial re-sampling is performed. |
| PaddingX | int | PaddingX indicates a quantity of pixels that are padded in a horizontal direction. |
| PaddingY | int | PaddingY indicates a quantity of pixels that are padded in a vertical direction. |
| Temporal ScaleFlag | bool | TemporalScaleFlag indicates whether time domain re-sampling is performed on the video. When a value of the field is 1, time domain sampling is performed on the video, and when the value is 0, time domain sampling is not performed on the video. |
| TemporalScaleRatio | int | TemporalScaleRatio indicates a time domain sampling rate. |
| DroppedFrameNumber | int | DroppedFrameNumber indicates a tail dropped frame quantity of the video. |
| ROINumber | int | ROINumber indicates a quantity of key video regions in the video. |

(continued)

| Parameter | Data type | Description |
|---|---|---|
| ROIinformation | | ROIinformation indicates related information of the key video region, for example, coordinates. |

In this embodiment of this application, a target sampling parameter of original video data is adaptively determined according to a media application scenario and a video content feature of the original video data, and the original video data is sampled based on the target sampling parameter, to obtain sampled video data, so that accuracy of sampling the original video data can be improved, video viewing quality can be ensured, and redundancy of encoded video data is effectively reduced. Further, the sampled video data is encoded, to obtain encoded video data. Only the encoded video data needs to be transmitted to a decoding device, so that a data amount of the encoded video data can be reduced and transmission efficiency of the encoded video data is improved. Therefore, the decoding device can rapidly obtain the encoded video data, and encoding efficiency of the original video data can also be improved.

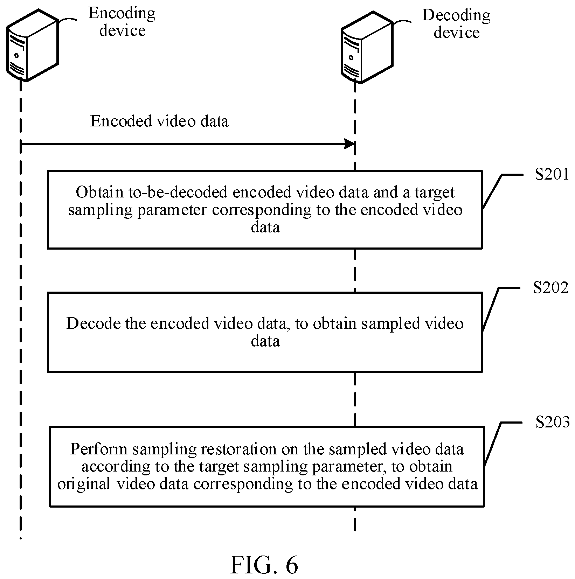

As shown in FIG. 6, FIG. 6 shows a video decoding method according to an embodiment of this application. The video decoding method provided in this embodiment of this application is described below in detail with reference to FIG. 6. The method may be performed by a computer device. The computer device may be a decoding device. As shown in FIG. 6, the method may specifically include, but not limited to, the following operations.

S201: Obtain to-be-decoded encoded video data and a target sampling parameter corresponding to the encoded video data.

Specifically, the decoding device may obtain to-be-decoded encoded video data and a target sampling parameter corresponding to the encoded video data. The encoded video data is obtained by encoding sampled video data, the sampled video data is obtained by sampling original video data corresponding to the encoded video data based on the target sampling parameter, and the target sampling parameter is determined according to a media application scenario and a video content feature of the original video data.

In some embodiments, the target sampling parameter is transmitted by an encoding device. The target sampling parameter includes a target sampling mode and a target sampling rate in the target sampling mode. The target sampling mode is determined according to the video content feature of the original video data. The target sampling rate in the target sampling mode is determined according to a video perceptual feature and the video content feature, the video perceptual feature is a perceptual feature of a target object for video data in the media application scenario, and the target object is an object that perceives the original video data. The target sampling mode may include a temporal sampling mode and a target sampling rate in the temporal sampling mode and a spatial sampling mode and a target sampling rate in the spatial sampling mode. For determining the target sampling parameter, refer to the content in step S102 in FIG. 3. The to-be-decoded encoded video data is obtained through encoding based on the adaptively determined target sampling mode and the target sampling rate in the target sampling mode. The target sampling mode and the target sampling rate in the target sampling mode are determined according to the media application scenario and the video content feature, so that a data amount of the encoded video data obtained by encoding the original video data can be reduced, thereby reducing a data amount that is processed during video decoding and improving efficiency of decoding video data.

S202: Decode the encoded video data, to obtain the sampled video data.

Specifically, a decoding process of the decoding device is opposite to an encoding process of the encoding device. The decoding device may obtain the to-be-decoded encoded video data transmitted by the encoding device, perform entropy decoding on the encoded video data, and obtain various parameters and a quantized transform coefficient. Dequantization and inverse transform are performed on the quantized transform coefficient, to obtain a residual video signal. In addition, a corresponding video predicted signal may be obtained according to known encoding mode information transmitted by the encoding device, and a reconstructed video signal may be obtained by adding the video predicted signal and the residual video signal. Finally, a loop filtering operation needs to be performed on the reconstructed video signal, to generate sampled video data. The sampled video data may be the sampled video data obtained by sampling the original video data by the encoding device.

S203: Perform sampling restoration on the sampled video data according to the target sampling parameter, to obtain the original video data corresponding to the encoded video data.

Specifically, the decoding device may perform sampling restoration on the sampled video data according to the target sampling parameter, to obtain the original video data corresponding to the encoded video data. The decoding device rapidly obtains the encoded video data in a low bit rate, and decodes and performs sampling restoration on the encoded video data in the low bit rate, to obtain the original video data corresponding to the encoded video data, so that decoding efficiency of decoding the encoded video data can be improved, and storage space of the encoded video data can be reduced.

In some embodiments, a specific manner in which the decoding device performs sampling restoration on the sampled video data may include: if the target sampling mode is a temporal sampling mode, determining a third video frame quantity between a first decoded video frame and a second decoded video frame according to a target sampling rate in the temporal sampling mode, where the first decoded video frame and the second decoded video frame are video frames whose play sequence numbers have a neighboring relationship in the sampled video data; and the third video frame quantity is a quantity of to-be-restored video frames between the first decoded video frame and the second decoded video frame; inserting the third video frame quantity of restored video frames between the first decoded video frame and the second decoded video frame; and determining, after a restored video frame is inserted between any two adjacent decoded video frames in the sampled video data, the original video data corresponding to the encoded video data according to sampled video data obtained through restoration.

Specifically, if a parameter that is transmitted by the encoding device and that is received by the decoding device indicates the encoding device to sample the original video data by using a temporal sampling mode, the decoding device may determine that the target sampling mode is the temporal sampling mode, obtain a target sampling rate in the temporal sampling mode, and determine a third video frame quantity of to-be-restored video frames between a first decoded video frame a the second decoded video frame according to the target sampling rate in the temporal sampling mode. Specifically, if the target sampling rate in the temporal sampling mode is n (that is, collecting one video frame every n-1 video frames), the third video frame quantity of to-be-restored video frames between the first decoded video frame and the second decoded video frame is n-1. For example, if the target sampling rate in the temporal sampling mode is 2 (that is, collecting one video frame every one video frame), the third video frame quantity of to-be-restored video frames between the first decoded video frame and the second decoded video frame is 1. If the target sampling rate in the temporal sampling mode is 3 (that is, collecting one video frame every two video frames), the third video frame quantity of to-be-restored video frames between the first decoded video frame and the second decoded video frame is 2. Further, the decoding device may insert the third video frame quantity of restored video frames between the first decoded video frame and the second decoded video frame; and determine, after a restored video frame is inserted between any two adjacent decoded video frames in the sampled video data, the original video data corresponding to the encoded video data according to sampled video data obtained through restoration.

In some embodiments, the third video frame quantity of restored video frames is generated according to the first decoded video frame; or the third video frame quantity of restored video frames is generated according to the second decoded video frame; or the third video frame quantity of restored video frames is generated according to the first decoded video frame and the second decoded video frame.

Specifically, the third video frame quantity of restored video frames may be the same as the first decoded video frame, that is, the third video frame quantity of first decoded video frames is inserted between the first decoded video frame and the second decoded video frame. Certainly, the third video frame quantity of restored video frames may be the same as the second decoded video frame, that is, the third video frame quantity of second decoded video frames is inserted between the first decoded video frame and the second decoded video frame. In other words, the third video frame quantity of repeated video frames (the repeated video frame may be the first decoded video frame or the second decoded video frame) is inserted between the first decoded video frame and the second decoded video frame. Certainly, the third video frame quantity of restored video frames may be obtained through network prediction according to the first decoded video frame and the second decoded video frame. For example, the decoding device may predict object motion information of a restored video frame between the first decoded video frame and the second decoded video frame according to object motion information of the first decoded video frame and object motion information of the second decoded video frame. A plurality of restored video frames are inserted between video frames whose play sequence numbers have a neighboring relationship, to accurately and rapidly decode the encoded video data.

In some embodiments, a specific manner in which the decoding device determines the original video data corresponding to the encoded video data according to the sampled video data obtained through restoration may include: after the restored video frame is inserted between the any two adjacent decoded video frames in the sampled video data, obtaining a fourth video frame quantity of video frames included in the sampled video data obtained through restoration and a total video frame quantity of video frames included in the original video data; if the fourth video frame quantity is the same as the total video frame quantity, determining the sampled video data obtained through restoration as the original video data corresponding to the encoded video data; and if the fourth video frame quantity is different from the total video frame quantity, obtaining a difference between the fourth video frame quantity and the total video frame quantity as a fifth video frame quantity, and inserting the fifth video frame quantity of restored video frames after the sampled video data obtained through restoration, to obtain the original video data corresponding to the encoded video data.

Specifically, if a parameter that is transmitted by the encoding device and that is obtained by the decoding device includes a total video frame quantity of video frames included in the original video data, after a restored video frame is inserted between any two adjacent decoded video frames in the sampled video data, the decoding device may obtain a quantity of video frames included in the sampled video data obtained through restoration as a fourth video frame quantity. Further, the decoding device may detect whether the fourth video frame quantity of video frames included in the sampled video data obtained through restoration is the same as the total video frame quantity of video frames included in the original video data. If the fourth video frame quantity is different from the total video frame quantity, the decoding device obtains a difference between the fourth video frame quantity and the total video frame quantity as a fifth video frame quantity, and inserts the fifth video frame quantity of restored video frames after the sampled video data obtained through restoration, to obtain the original video data corresponding to the encoded video data. In this way, a quantity of video frames in the original video data can be accurately restored. The fifth video frame quantity of restored video frames may be determined according to a video frame whose a play sequence is the latest in the sampled video data obtained through restoration, for example, the fifth video frame quantity of restored video frames may be a video frame whose play sequence is the latest in the sampled video data obtained through restoration, or may be obtained through network prediction according to the video frame whose play sequence is the latest in the sampled video data obtained through restoration. If the fourth video frame quantity is the same as the total video frame quantity, the sampled video data obtained through restoration may be determined as the original video data corresponding to the encoded video data.

Specifically, if a parameter that is transmitted by the encoding device and that is obtained by the decoding device includes a tail dropped video frame quantity of video frames included in the original video data, the tail dropped video frame quantity of restored video frames may be directly inserted after the sampled video data obtained through restoration, to obtain the original video data corresponding to the encoded video data. In this way, the quantity of video frames in the original video data can be accurately restored by using the total video frame quantity of video frames included in the original video data, to ensure decoding quality of video data. Certainly, the tail dropped video frame quantity of restored video frames may alternatively be determined according to the video frame whose play sequence is the latest in the sampled video data obtained through restoration.

In some embodiments, a specific manner in which the decoding device performs sampling restoration on the sampled video data may include: if the target sampling mode is a spatial sampling mode, obtaining a current target video resolution of a third decoded video frame in the sampled video data; performing resolution restoration on the third decoded video frame having the target video resolution according to a target sampling rate in the spatial sampling mode and the target video resolution, to obtain a third decoded video frame having an original video resolution; and after all decoded video frames in the sampled video data are restored, determining sampled video data obtained through restoration as the original video data corresponding to the encoded video data.

Specifically, if the target sampling mode is a spatial sampling mode, a third decoded video frame in the sampled video data is used as an example, the third decoded video frame is any video frame in the sampled video data, and the decoding device may obtain a current target video resolution of the third decoded video frame in the sampled video data and obtain a target sampling rate in the spatial sampling mode. Further, the decoding device may obtain an initial video resolution by using a ratio of the current target video resolution of the third decoded video frame to the target sampling rate in the spatial sampling mode (that is, the target video resolution/the target sampling rate in the spatial sampling mode). The decoding device may perform restoration processing on the third decoded video frame having the target video resolution by using a spatial sampling restoration method, to obtain a third decoded video frame having the initial video resolution. Further, a third decoded video frame having an original video resolution is generated according to the third decoded video frame having the initial video resolution. The spatial sampling restoration method may be any one of a nearest neighbor interpolation method, a re-sampling filtering method, a bilinear interpolation method, and a sampling model prediction method, and may be the same as the spatial sampling method in the encoding device, or may be different from the spatial sampling mode in the encoding device. After all the decoded video frames in the sampled video data are restored, the sampled video data obtained through restoration is determined as the original video data corresponding to the encoded video data. In this way, resolution restoration is performed, by using the target video resolution, on the encoded video data obtained through encoding in the spatial sampling mode, so that the original video resolution of the original video data can be accurately restored, to improve decoding accuracy.

In some embodiments, a specific manner in which the decoding device obtains the third decoded video frame having the original video resolution may include: if pixel padding location information of the third decoded video frame is received, performing pixel cropping on the third decoded video frame having the target video resolution according to the pixel padding location information, to obtain a third decoded video frame having an initial video resolution, determining a ratio of the initial video resolution to the target sampling rate in the spatial sampling mode as a to-be-restored original video resolution of the third decoded video frame, and performing resolution restoration on the third decoded video frame having the initial video resolution, to obtain the third decoded video frame having the original video resolution; and if the pixel padding location information of the third decoded video frame is not received, determining a ratio of the target sampling rate in the spatial sampling mode to the target video resolution as a to-be-restored original video resolution of the third decoded video frame, and performing resolution restoration on the third decoded video frame having the target video resolution, to obtain the third decoded video frame having the original video resolution.

For example, the target sampling rate in the spatial sampling mode is 0.5, and the target video resolution of the third decoded video frame is 960*544. If received pixel padding location information corresponding to the third decoded video frame is that four pixel values are padded in a vertical direction, the decoding device may perform pixel cropping on pixel values of the third decoded video frame whose target video resolution is 960*544 in the vertical direction by four pixel values, to obtain a third decoded video frame having an initial video resolution 960*540. Further, the decoding device may obtain a ratio of the initial video resolution 960*540 to 0.5 (namely, the target sampling rate in the spatial sampling mode) (that is, (960*540)/0.5), to obtain a to-be-restored original video resolution of the third decoded video frame, that is, 1920* 1080. Further, the decoding device may perform resolution restoration on the third decoded video frame having the target video resolution according to any one of a nearest neighbor interpolation method, a re-sampling filtering method, a bilinear interpolation method, and a sampling model prediction method, to obtain the third decoded video frame having the original video resolution. In this way, resolution restoration is performed on the original video resolution based on the pixel padding location information, or the original video resolution is directly determined, so that the original video resolution of the original video data can be accurately restored, to improve decoding accuracy.

In some embodiments, a specific manner in which the decoding device performs sampling restoration on the sampled video data may include: if the target sampling mode is a temporal sampling mode and a spatial sampling mode, obtaining a target video resolution of a third decoded video frame in the sampled video data, and performing resolution restoration on the target video resolution of the third decoded video frame according to a target sampling rate in the spatial sampling mode and the target video resolution, to obtain a third decoded video frame having an original video resolution; after all decoded video frames in the sampled video data are restored, determining sampled video data obtained through restoration as initial video data corresponding to the encoded video data; determining a sixth video frame quantity of to-be-restored video frames between a first initial video frame and a second initial video frame according to a target sampling rate in the temporal sampling mode, where the first initial video frame and the second initial video frame are video frames whose play sequence numbers have a neighboring relationship in the initial video data; and inserting the sixth video frame quantity of restored video frames between the first initial video frame and the second initial video frame, and determining, after a restored video frame is inserted between any two adjacent initial video frames in the initial video data, the original video data corresponding to the encoded video data according to initial video data obtained through restoration.

Specifically, if the decoding device receives parameters such as TemporalScaleFlag (a temporal sampling flag), TemporalRatio (a target sampling rate flag in a temporal sampling mode), DroppedFrameNumber (a tail dropped frame quantity flag), SpatialScaleFlag (a spatial sampling flag), SpatialScaleRatio (a target sampling rate flag in a spatial sampling mode), PaddingFlag (a pixel padding flag), PaddingX (a pixel value padded in a horizontal direction, that is, a width direction), and PaddingY (a pixel value padded in a vertical direction, that is, a height direction) that are transmitted by the encoding device, the decoding device may determine, according to SpatialScaleFlag in the parameters, whether spatial sampling is performed on the sampled video data obtained through decoding. If a value of SpatialScaleFlag is 1, SpatialScaleRatio and PaddingFlag continue to be obtained from the parameters. If a value of PaddingFlag is 1, PaddingX and PaddingY continue to be obtained, and pixels padded in the sampled video data in the horizontal direction and the vertical direction are cropped. An original video resolution is calculated according to SpatialScaleRatio and a target video resolution of cropped sampled video data, and restoration processing is performed on the cropped sampled video data by using the spatial sampling method (for example, nearest neighbor interpolation, bilinear interpolation, or a video or image super-resolution neural network), to obtain initial video data corresponding to the sampled video data.

Further, the decoding device may determine, according to TemporalScaleFlag in the parameters, whether temporal sampling is performed on the sampled video data. If a value of TemporalScaleFlag is 1, TemporalRatio and DroppedFrameNumber continue to be obtained from the parameters. The decoding device determines a sixth video frame quantity of restored video frames between a first initial video frame and a second initial video frame in the initial video data according to TemporalRatio. The first initial video frame and the second initial video frame are video frames whose play sequence numbers have a neighboring relationship in the initial video data. For example, a to-be-restored video frame between the first initial video frame and the second initial video frame is determined through a repeated frame, a video interpolation network, or the like. For details, refer to content of determining the to-be-restored video frame between the first decoded video frame and the second decoded video frame. The sixth video frame quantity of restored video frames is inserted between the first initial video frame and the second initial video frame, and after a restored video frame is inserted between any two adjacent initial video frames in the initial video data, a missing video frame in the initial video data obtained through restoration is padded according to DroppedFrameNumber, to obtain corresponding original video data after cropping.

In some embodiments, the decoding device may receive key video region information of the encoded video data transmitted by the encoding device, and determine a key video region in the original video data according to the key video region information. Image enhancement is performed on the key video region in the original video data, to obtain original video data obtained through image enhancement. Specifically, if the decoding device obtains ROINumber (a region quantity flag) and ROIInformation (a region feature information flag, for example, region coordinate information), the decoding device may perform image enhancement processing on all key video regions in the original video data according to ROINumber (the region quantity flag) and ROIInformation (the region feature information flag, for example, the region coordinate information). In this way, a display effect of the original video data obtained through restoration can be improved, and restoration accuracy of the original video data can also be improved. In addition, when an object recognition task is performed on the restored original video data subsequently, recognition accuracy can be improved.

In some embodiments, a specific manner in which the decoding device performs image enhancement on the key video region in the original video data, to obtain the original video data obtained through image enhancement may include: inputting the key video region in the original video data into an image enhancement model, and generating an image enhancement coefficient of the key video region in the original video data by using an enhancement coefficient generation layer in the image enhancement model; and performing image enhancement on the key video region in the original video data by using an image enhancement layer in the image enhancement model, to obtain the original video data obtained through image enhancement. In this way, image enhancement processing is performed on the key video region in the original video data by using the image enhancement model, so that image enhancement efficiency and accuracy can be improved. Certainly, the decoding device may alternatively perform image enhancement processing on the key video region in the original video data in another image enhancement mode. This is not limited in this embodiment of this application.

In this embodiment of this application, to-be-decoded encoded video data is decoded, to obtain sampled video data. A target sampling parameter is determined according to a media application scenario and a video content feature of original video data corresponding to the encoded video data. Therefore, the encoded video data is obtained by sampling and encoding the original video data according to a target sampling parameter. The target sampling parameter is determined according to the media application scenario and the video content feature of the original video data corresponding to the encoded video data. Because the encoded video data is obtained by encoding the sampled video data, that is, the encoded video data is obtained by encoding a part of video content in the original video data, that is, in a decoding process, only encoded data in a part of video content needs to be decoded, thereby improving decoding efficiency of video data. In addition, sampling restoration is performed on the sampled video data based on the target sampling parameter, so that the original video data can be restored to some extent, thereby improving quality of video data.

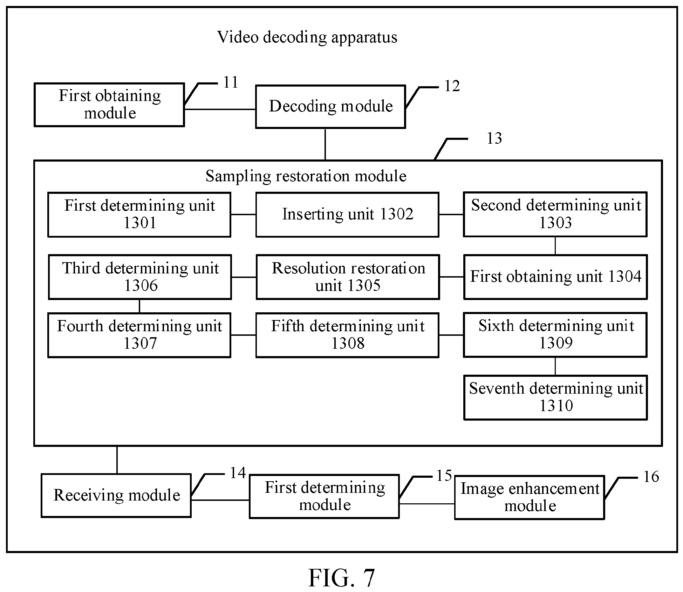

Referring to FIG. 7, FIG. 7 is a schematic structural diagram of a video decoding apparatus according to an embodiment of this application. The video decoding apparatus may be computer-readable instructions (including program code) run on a computer device. For example, the video decoding apparatus is application software. The video decoding apparatus may be configured to perform corresponding operations in the video decoding method provided in the embodiments of this application. As shown in FIG. 7, the video decoding apparatus may include: a first obtaining module 11, a decoding module 12, a sampling restoration module 13, a receiving module 14, a first determining module 15, and an image enhancement module 16.

The first obtaining module 11 is configured to obtain to-be-decoded encoded video data and a target sampling parameter corresponding to the encoded video data. The encoded video data is obtained by encoding sampled video data, the sampled video data is obtained by sampling original video data corresponding to the encoded video data based on the target sampling parameter, and the target sampling parameter is determined according to a media application scenario and a video content feature of the original video data. The decoding module 12 is configured to decode the encoded video data, to obtain the sampled video data. The sampling restoration module 13 is configured to perform sampling restoration on the sampled video data according to the target sampling parameter, to obtain the original video data corresponding to the encoded video data.

The target sampling parameter is transmitted by an encoding device, and the target sampling parameter includes a target sampling mode and a target sampling rate in the target sampling mode. The target sampling mode is determined according to the video content feature of the original video data. The target sampling rate in the target sampling mode is determined according to a video perceptual feature and the video content feature. The video perceptual feature is a perceptual feature of a target object for video data in the media application scenario, and the target object is an object that perceives the original video data.

The sampling restoration module 13 includes: a first determining unit 1301, configured to: if the target sampling mode is a temporal sampling mode, determine a third video frame quantity between a first decoded video frame and a second decoded video frame according to a target sampling rate in the temporal sampling mode, where the first decoded video frame and the second decoded video frame are video frames whose play sequence numbers have a neighboring relationship in the sampled video data; and the third video frame quantity is a quantity of to-be-restored video frames between the first decoded video frame and the second decoded video frame; an inserting unit 1302, configured to insert the third video frame quantity of restored video frames between the first decoded video frame and the second decoded video frame; and a second determining unit 1303, configured to determine, after a restored video frame is inserted between any two adjacent decoded video frames in the sampled video data, the original video data corresponding to the encoded video data according to sampled video data obtained through restoration.

The third video frame quantity of restored video frames is generated according to the first decoded video frame; or the third video frame quantity of restored video frames is generated according to the second decoded video frame; or the third video frame quantity of restored video frames is generated according to the first decoded video frame and the second decoded video frame.

The second determining unit 1303 is specifically configured to: after the restored video frame is inserted between the any two adjacent decoded video frames in the sampled video data, obtain a fourth video frame quantity of video frames included in the sampled video data obtained through restoration and a total video frame quantity of video frames included in the original video data; if the fourth video frame quantity is the same as the total video frame quantity, determine the sampled video data obtained through restoration as the original video data corresponding to the encoded video data; and if the fourth video frame quantity is different from the total video frame quantity, obtain a difference between the fourth video frame quantity and the total video frame quantity as a fifth video frame quantity, and insert the fifth video frame quantity of restored video frames after the sampled video data obtained through restoration, to obtain the original video data corresponding to the encoded video data.

The sampling restoration module 13 further includes: a first obtaining unit 1304, configured to: if the target sampling mode is a spatial sampling mode, obtain a current target video resolution of a third decoded video frame in the sampled video data; a resolution restoration unit 1305, configured to perform resolution restoration on the third decoded video frame having the target video resolution according to a target sampling rate in the spatial sampling mode and the target video resolution, to obtain a third decoded video frame having an original video resolution; and a third determining unit 1306, configured to: after all decoded video frames in the sampled video data are restored, determine sampled video data obtained through restoration as the original video data corresponding to the encoded video data.

The resolution restoration unit 1305 is specifically configured to perform at least one of the following: if pixel padding location information of the third decoded video frame is received, performing pixel cropping on the third decoded video frame having the target video resolution according to the pixel padding location information, to obtain a third decoded video frame having an initial video resolution, determining a ratio of the initial video resolution to the target sampling rate in the spatial sampling mode as a to-be-restored original video resolution of the third decoded video frame, and performing resolution restoration on the third decoded video frame having the initial video resolution, to obtain the third decoded video frame having the original video resolution; and if the pixel padding location information of the third decoded video frame is not received, determining a ratio of the target sampling rate in the spatial sampling mode to the target video resolution as a to-be-restored original video resolution of the third decoded video frame, and performing resolution restoration on the third decoded video frame having the target video resolution, to obtain the third decoded video frame having the original video resolution.

The sampling restoration module 13 further includes: a fourth determining unit 1307, configured to: if the target sampling mode is a temporal sampling mode and a spatial sampling mode, obtain a target video resolution of a third decoded video frame in the sampled video data, and perform resolution restoration on the target video resolution of the third decoded video frame according to a target sampling rate in the spatial sampling mode and the target video resolution, to obtain a third decoded video frame having an original video resolution; a fifth determining unit 1308, configured to: after all decoded video frames in the sampled video data are restored, determine sampled video data obtained through restoration as initial video data corresponding to the encoded video data; a sixth determining unit 1309, configured to determine a sixth video frame quantity of to-be-restored video frames between a first initial video frame and a second initial video frame according to a target sampling rate in the temporal sampling mode, where the first initial video frame and the second initial video frame are video frames whose play sequence numbers have a neighboring relationship in the initial video data; and a seventh determining unit 1310, configured to insert the sixth video frame quantity of restored video frames between the first initial video frame and the second initial video frame, and determine, after a restored video frame is inserted between any two adjacent initial video frames in the initial video data, the original video data corresponding to the encoded video data according to initial video data obtained through restoration.

The video decoding apparatus further includes: the receiving module 14, configured to receive key video region information of the encoded video data transmitted by the encoding device; the first determining module 15, configured to determine a key video region in the original video data according to the key video region information; and the image enhancement module 16, configured to perform image enhancement on the key video region in the original video data, to obtain original video data obtained through image enhancement.

The image enhancement module 16 includes: a first generation unit 1601, configured to input the key video region in the original video data into an image enhancement model, and generate an image enhancement coefficient of the key video region in the original video data by using an enhancement coefficient generation layer in the image enhancement model; and an image enhancement unit 1602, configured to perform image enhancement on the key video region in the original video data by using an image enhancement layer in the image enhancement model, to obtain the original video data obtained through image enhancement.

According to an embodiment of this application, modules in the video decoding apparatus shown in FIG. 7 may be separately or wholly combined into one or several units, or one (or more) of the units herein may further be divided into a plurality of subunits of smaller functions. In this way, same operations can be implemented, and implementation of the technical effects of the embodiments of this application is not affected. The foregoing modules are divided based on logical functions. In an actual application, a function of one module may also be implemented by a plurality of units, or functions of a plurality of modules are implemented by one unit. In other embodiments of this application, the video decoding apparatus may also include other units. During actual application, the functions may also be cooperatively implemented by other units and may be cooperatively implemented by a plurality of units.

On a decoding device side, encoded video data is decoded, to obtain sampled video data. Because the encoded video data is obtained by encoding the sampled video data, that is, the encoded video data is obtained by encoding a part of video content in the original video data, that is, in a decoding process, only encoded data in a part of video content needs to be decoded, thereby improving decoding efficiency of video data. In addition, sampling restoration is performed on the sampled video data based on the target sampling parameter, so that the original video data can be restored to some extent, thereby improving quality of video data.

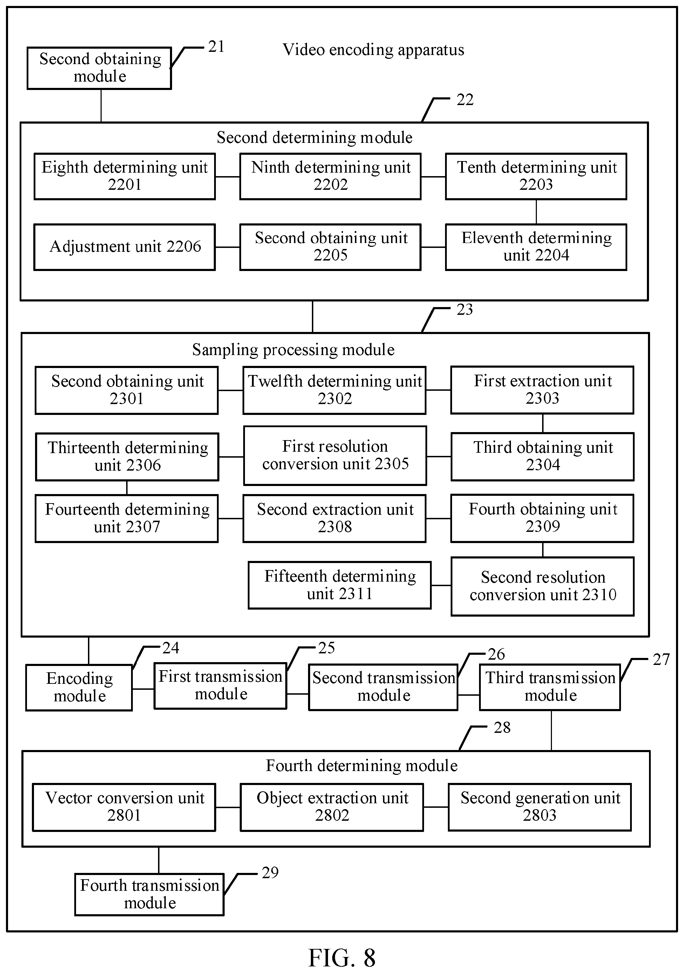

Referring to FIG. 8, FIG. 8 is a schematic structural diagram of a video encoding apparatus according to an embodiment of this application. The video encoding apparatus may be computer-readable instructions (including program code) run on a computer device. For example, the video decoding apparatus is application software. The video encoding apparatus may be configured to perform corresponding operations in the video encoding method provided in the embodiments of this application. As shown in FIG. 8, the video encoding apparatus may include: a second obtaining module 21, a second determining module 22, a sampling processing module 23, an encoding module 24, a first transmission module 25, a second transmission module 26, a third transmission module 27, a fourth determining module 28, and a fourth transmission module 29.

The second obtaining module 21 is configured to obtain a media application scenario and a video content feature of to-be-encoded original video data.

The second determining module 22 is configured to determine, according to the media application scenario and the video content feature, a target sampling parameter for sampling the original video data.

The sampling processing module 23 is configured to sample the original video data according to the target sampling parameter, to obtain sampled video data.

The encoding module 24 is configured to encode the sampled video data, to obtain encoded video data corresponding to the original video data.

The second determining module 22 includes: an eighth determining unit 2201, configured to determine, according to the video content feature, a target sampling mode for sampling the original video data; a ninth determining unit 2202, configured to determine a video perceptual feature of a target object for video data in the media application scenario, where the target object is an object that perceives the original video data; a tenth determining unit 2203, configured to determine a target sampling rate in the target sampling mode according to the video perceptual feature and the video content feature; and an eleventh determining unit 2204, configured to determine the target sampling rate and the target sampling mode as the target sampling parameter for sampling the original video data.

The eighth determining unit 2201 is specifically configured to determine a repetition rate of video content in the original video data according to a video content change rate included in the video content feature; and determine, according to the repetition rate of the video content in the original video data, the target sampling mode for sampling the original video data.

The determining, according to the repetition rate of the video content in the original video data, the target sampling mode for sampling the original video data includes at least one of the following: if the repetition rate of the video content in the original video data is greater than a first repetition rate threshold, determining a temporal sampling mode and a spatial sampling mode as the target sampling mode for sampling the original video data; if the repetition rate of the video content in the original video data is less than or equal to the first repetition rate threshold and greater than a second repetition rate threshold, determining the temporal sampling mode as the target sampling mode for sampling the original video data, where the second repetition rate threshold is less than the first repetition rate threshold; and if the repetition rate of the video content in the original video data is less than or equal to the second repetition rate threshold, determining the spatial sampling mode as the target sampling mode for sampling the original video data.

The eighth determining unit 2201 is specifically configured to determine complexity of video content in the original video data according to a video content information amount included in the video content feature; and determine, according to the complexity of the video content in the original video data, the target sampling mode for sampling the original video data.

The determining, according to the complexity of the video content in the original video data, the target sampling mode for sampling the original video data includes at least one of the following: if the complexity of the video content in the original video data is less than a first complexity threshold, determining a temporal sampling mode and a spatial sampling mode as the target sampling mode for sampling the original video data; if the complexity of the video content in the original video data is greater than or equal to the first complexity threshold and less than a second complexity threshold, determining the spatial sampling mode as the target sampling mode for sampling the original video data, where the second complexity threshold is greater than the first complexity threshold; and if the complexity of the video content in the original video data is greater than the second complexity threshold, determining the temporal sampling mode as the target sampling mode for sampling the original video data.

The tenth determining unit 2203 is specifically configured to: if the target sampling mode is a temporal sampling mode, determine, according to the video perceptual feature, a limited quantity of video frames that correspond to the video data and that are perceived by the target object in unit time; and determine a target sampling rate in the temporal sampling mode according to a ratio of the limited quantity of video frames to a quantity of played video frames, where the quantity of played video frames represents a quantity of video frames that are played in the unit time in the original video data and that are indicated by the video content feature.

The tenth determining unit 2203 is specifically configured to: if the target sampling mode is a spatial sampling mode, determine, according to the video perceptual feature, a limited video resolution associated with the target object; and determine a ratio of the limited video resolution to a video frame resolution as a target sampling rate in the spatial sampling mode, where the video frame resolution represents a video resolution that is of a video frame in the original video data and that is indicated by the video content feature.

The tenth determining unit 2203 is specifically configured to: if the target sampling mode is a temporal sampling mode and a spatial sampling mode, determine, according to the video perceptual feature, a limited quantity of video frames that correspond to video data and that are perceived by the target object in unit time, and determine a limited video resolution associated with the target object; determine a target sampling rate in the temporal sampling mode according to a ratio of the limited quantity of video frames to a quantity of played video frames, where the quantity of played video frames represents a quantity of video frames that are played in the unit time in the original video data and that are indicated by the video content feature; and determine a ratio of the limited video resolution to a video frame resolution as a target sampling rate in the spatial sampling mode, where the video frame resolution represents a video resolution that is of a video frame in the original video data and that is indicated by the video content feature.

The sampling processing module 23 includes: a second obtaining unit 2301, configured to: if the target sampling mode is a temporal sampling mode, obtain a play sequence number of a video frame in the original video data and a total video frame quantity of video frames included in the original video data; a twelfth determining unit 2302, configured to determine, according to a target sampling rate in the temporal sampling mode and the total video frame quantity, a quantity of to-be-extracted video frames in the original video data as a first video frame quantity; and a first extraction unit 2303, configured to extract the first video frame quantity of video frames from the original video data according to the play sequence number of the video frame in the original video data as the sampled video data.

The sampling processing module 23 includes: a third obtaining unit 2304, configured to: if the target sampling mode is a spatial sampling mode, obtain an original video resolution of a video frame $M_i$ in the original video data, where i is a positive integer less than or equal to M, and M is a quantity of video frames in the original video data; a first resolution conversion unit 2305, configured to perform resolution conversion on the video frame $M_i$ having the original video resolution according to a target sampling rate in the spatial sampling mode and the original video resolution of the video frame $M_i$, to obtain a video frame $M_i$ having a target video resolution; and a thirteenth determining unit 2306, configured to: after performing resolution sampling on all video frames in the original video data, determine original video data obtained through resolution conversion as the sampled video data.

The first resolution conversion unit 2305 is specifically configured to use a product of the target sampling rate in the spatial sampling mode and the original video resolution of the video frame $M_i$ as an initial video resolution; perform resolution conversion on the video frame $M_i$ having the original video resolution, to obtain a video frame $M_i$ having the initial video resolution; if the video frame $M_i$ having the initial video resolution does not meet an encoding condition, perform pixel padding on the video frame $M_i$ having the initial video resolution, determine a video resolution of a video frame $M_i$ obtained through padding as the target video resolution, and determine the video frame $M_i$ obtained through padding as the video frame $M_i$ having the target video resolution; and if the video frame $M_i$ having the initial video resolution meets the encoding condition, determine the initial video resolution as the target video resolution, and determine the video frame $M_i$ having the initial video resolution as the video frame $M_i$ having the target video resolution.

The sampling processing module 23 includes: a fourteenth determining unit 2307, configured to: if the target sampling mode is a temporal sampling mode and a spatial sampling mode, determine a quantity of to-be-extracted video frames in the original video data as a second video frame quantity according to a target sampling rate in the temporal sampling mode and a total video frame quantity in the original video data; a second extraction unit 2308, configured to extract the second video frame quantity of video frames from the original video data according to a play sequence number of a video frame in the original video data as initial sampled video data; a fourth obtaining unit 2309, configured to obtain an original video resolution of a video frame $N_j$ in the initial sampled video data, where j is a positive integer less than or equal to N, and N is a quantity of video frames in the initial sampled video data; a second resolution conversion unit 2310, configured to perform resolution conversion on the video frame $N_j$ having the original video resolution according to a target sampling rate in the spatial sampling mode and the original video resolution of the video frame $N_j$, to obtain a video frame $N_j$ having a target video resolution; and a fifteenth determining unit 2311, configured to: after performing resolution sampling on all video frames in the initial sampled video data, determine initial sampled video data obtained through resolution sampling as the sampled video data.

The video encoding apparatus further includes: the first transmission module 25, configured to transmit the total video frame quantity and the target sampling rate in the temporal sampling mode to a decoding device. The decoding device is configured to perform sampling restoration on the sampled video data corresponding to the encoded video data according to the total video frame quantity and the target sampling rate in the temporal sampling mode.

The video encoding apparatus further includes: the second transmission module 26, configured to: if the video frame $M_i$ having the target video resolution is obtained through pixel padding, obtain pixel padding location information for pixel padding in the video frame $M_i$ having the target video resolution, and transmit the target sampling rate in the spatial sampling mode and the pixel padding location information to the decoding device, where the decoding device is configured to perform sampling restoration on the sampled video data corresponding to the encoded video data according to the target sampling rate in the spatial sampling mode and the pixel padding location information; and the third transmission module 27, configured to: if the video frame $M_i$ having the target video resolution is not obtained through pixel padding, transmit the target sampling rate in the spatial sampling mode to the decoding device. The decoding device is configured to perform sampling restoration on the sampled video data corresponding to the encoded video data according to the target sampling rate in the spatial sampling mode.

The video encoding apparatus further includes: the fourth determining module 28, configured to determine key video region information of the original video data; and the fourth transmission module 29, configured to transmit the key video region information and the encoded video data to the decoding device. The key video region information is configured for indicating the decoding device to perform image enhancement processing on a key video region in the original video data.

The fourth determining module 28 includes: a vector conversion unit 2801, configured to input the original video data into a target detection model, and perform embedding vector conversion on the original video data by using an embedding layer in the target detection model, to obtain a media embedding vector of the original video data; an object extraction unit 2802, configured to perform object extraction on the media embedding vector by using an object extraction layer in the target detection model, to obtain a video object in the original video data; and a second generation unit 2803, configured to determine a region to which the video object belongs in the original video data as the key video region, and generate the key video region information for describing a location of the key video region in the original video data.

According to an embodiment of this application, modules in the video encoding apparatus shown in FIG. 8 may be separately or wholly combined into one or several units, or one (or more) of the units herein may further be divided into a plurality of subunits of smaller functions. In this way, same operations can be implemented, and implementation of the technical effects of the embodiments of this application is not affected. The foregoing modules are divided based on logical functions. In an actual application, a function of one module may also be implemented by a plurality of units, or functions of a plurality of modules are implemented by one unit. In other embodiments of this application, the video encoding apparatus may also include other units. During actual application, the functions may also be cooperatively implemented by other units and may be cooperatively implemented by a plurality of units.

On an encoding device side, a target sampling parameter of original video data is adaptively determined according to a media application scenario and a video content feature of the original video data, and the original video data is sampled based on the target sampling parameter, to obtain sampled video data, so that accuracy of sampling the original video data can be improved, video viewing quality can be ensured, and redundancy of encoded video data is effectively reduced. Further, the sampled video data is encoded, to obtain encoded video data. Only the encoded video data needs to be transmitted to a decoding device, which can reduce a data amount of the encoded video data and improve transmission efficiency of the encoded video data, so that the decoding device can rapidly obtain the encoded video data, and encoding efficiency of the original video data can also be improved.

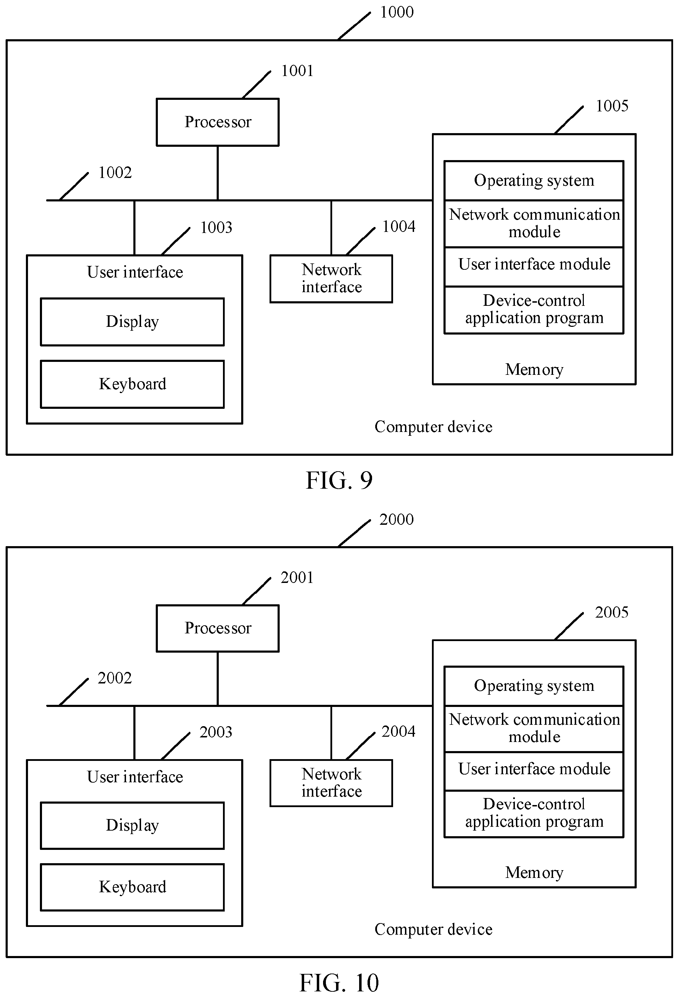

Referring to FIG. 9, FIG. 9 is a schematic structural diagram of a computer device according to an embodiment of this application. As shown in FIG. 9, the computer device 1000 may include: a processor 1001, a network interface 1004, and a memory 1005, as well as a user interface 1003 and at least one communication bus 1002. The communication bus 1002 is configured to implement connection and communication between the components. The user interface 1003 may include a display, a keyboard, and in some embodiments, the user interface 1003 may further include a standard wired interface and a standard wireless interface. The network interface 1004 may include a standard wired interface and a standard wireless interface (for example, a Wi-Fi interface). The memory 1005 may be a high-speed RAM memory, or may be a non-volatile memory, for example, at least one magnetic disk memory. In some embodiments, the memory 1005 may be at least one storage apparatus that is located far away from the processor 1001. As shown in FIG. 9, the memory 1005 used as a computer-readable storage medium may include an operating system, a network communication module, a user interface module, and a device-control application program.

In the computer device 1000 shown in FIG. 9, the network interface 1004 may provide a network communication function. The user interface 1003 is mainly configured to provide an input interface for a user. The processor 1001 may be configured to invoke a device-controlled application program stored in the memory 1005, to implement:

obtaining to-be-decoded encoded video data and a target sampling parameter corresponding to the encoded video data, the encoded video data being obtained by encoding sampled video data, the sampled video data being obtained by sampling original video data corresponding to the encoded video data based on the target sampling parameter, the target sampling parameter being determined according to a media application scenario and a video content feature of the original video data; decoding the encoded video data, to obtain the sampled video data; and

performing sampling restoration on the sampled video data according to the target sampling parameter, to obtain the original video data corresponding to the encoded video data.

The computer device 1000 described in this embodiment of this application can implement the descriptions of the video decoding method in the foregoing embodiment corresponding to FIG. 6, and can also implement the descriptions of the video decoding apparatus in the foregoing embodiment corresponding to FIG. 7. Details are not described herein again. In addition, beneficial effects achieved by using the same method are not described herein again.

Referring to FIG. 10, FIG. 10 is a schematic structural diagram of a computer device according to an embodiment of this application. As shown in FIG. 10, the computer device 2000 may include: a processor 2001, a network interface 2004, and a memory 2005, as well as a user interface 2003 and at least one communication bus 2002. The communication bus 2002 is configured to implement connection and communication between the components. The user interface 2003 may include a display, a keyboard, and in some embodiments, the user interface 2003 may further include a standard wired interface and a standard wireless interface. The network interface 2004 may include a standard wired interface and a standard wireless interface (for example, a Wi-Fi interface). The memory 2005 may be a high-speed RAM memory, or may be a non-volatile memory, for example, at least one magnetic disk memory. In some embodiments, the memory 2005 may be at least one storage apparatus that is located far away from the processor 2001. As shown in FIG. 10, the memory 2005 used as a computer-readable storage medium may include an operating system, a network communication module, a user interface module, and a device-control application program.

In the computer device 2000 shown in FIG. 10, the network interface 2004 may provide a network communication function. The user interface 2003 is mainly configured to provide an input interface for a user. The processor 2001 may be configured to invoke a device-controlled application program stored in the memory 2005, to implement:

obtaining a media application scenario and a video content feature of to-be-encoded original video data; determining, according to the media application scenario and the video content feature, a target sampling parameter for sampling the original video data; sampling the original video data according to the target sampling parameter, to obtain sampled video data; and encoding the sampled video data, to obtain encoded video data corresponding to the original video data.

The computer device 2000 described in this embodiment of this application can implement the descriptions of the video encoding method in the foregoing embodiment corresponding to FIG. 3, and can also implement the descriptions of the video encoding apparatus in the foregoing embodiment corresponding to FIG. 8. Details are not described herein again. In addition, beneficial effects achieved by using the same method are not described herein again.

In addition, an embodiment of this application further provides a computer-readable storage medium. The computer-readable storage medium stores computer-readable instructions executed by the video decoding apparatus mentioned above, and the computer-readable instructions include program instructions. When executing the program instructions, a processor can perform the descriptions of the video decoding method in the embodiment corresponding to FIG. 6 or the descriptions of the video encoding method in the embodiment corresponding to FIG. 3. Therefore, details are not described herein again.

In addition, beneficial effects achieved by using the same method are not described herein again. For technical details that are not disclosed in the embodiments of the computer-readable storage medium of this application, refer to the method embodiments of this application. In an example, the program instructions may be deployed to be executed on a computer device, or deployed to be executed on a plurality of computer devices at a same location, or deployed to be executed on a plurality of computer devices that are distributed in a plurality of locations and interconnected through a communication network. The plurality of computer devices that are distributed in the plurality of locations and interconnected through the communication network may form a blockchain system.

In addition, an embodiment of this application further provides a computer program product. The computer program product may include computer-readable instructions, and the computer-readable instructions are stored in a computer-readable storage medium. A processor of a computer device reads the computer-readable instructions from the computer-readable storage medium, the processor executes the computer-readable instructions, to cause the computer device to perform the video decoding method in the embodiment corresponding to FIG. 6 or perform the video encoding method in the embodiment corresponding to FIG. 3.

For ease of description, the foregoing method embodiments are stated as a combination of a series of actions. However, a person skilled in the art is to know that this application is not limited to the described action sequence, because according to this application, some operations may be performed in another sequence or simultaneously. In addition, a person skilled in the art is also to understand that the embodiments described in this specification are all exemplary embodiments, and the involved actions and modules are not necessarily required by this application.

Operations in the method of embodiments of the present invention may be adjusted in terms of a sequence, combined, or deleted according to an actual requirement.

Merging, division, and removing may be performed on the modules in the apparatus in the embodiments of this application according to an actual need.

A person of ordinary skill in the art may understand that all or some of the procedures of the methods in the foregoing embodiments may be implemented by a computer-readable instruction instructing relevant hardware. The program may be stored in a computer-readable storage medium. When the program runs, the procedures of the foregoing method embodiments are performed. The foregoing storage medium may be a magnetic disk, an optical disc, a read-only memory (ROM), a random access memory (RAM), or the like.

Disclosed above are merely exemplary embodiments of the present invention, and are certainly not intended to limit the patent scope of the present invention. Therefore, an equivalent change made according to the claims of the present invention still falls within the scope of the present invention.

**Claims**

1. A video encoding method, performed by a computer device, comprising:

   obtaining a media application scenario and a video content feature of to-be-encoded original video data;
   determining, according to the media application scenario and the video content feature, a target sampling parameter for sampling the original video data;
   sampling the original video data according to the target sampling parameter, to obtain sampled video data; and
   encoding the sampled video data, to obtain encoded video data corresponding to the original video data.

2. The method according to claim 1, wherein the determining, according to the media application scenario and the video content feature, a target sampling parameter for sampling the original video data comprises:

   determining, according to the video content feature, a target sampling mode for sampling the original video data;
   determining a video perceptual feature of a target object for video data in the media application scenario, wherein the target object is an object that perceives the original video data;
   determining a target sampling rate in the target sampling mode according to the video perceptual feature and the video content feature; and
   determining the target sampling rate and the target sampling mode as the target sampling parameter for sampling the original video data.

3. The method according to claim 2, wherein the determining, according to the video content feature, a target sampling mode for sampling the original video data comprises:

   determining a repetition rate of video content in the original video data according to a video content change rate comprised in the video content feature; and
   determining, according to the repetition rate of the video content in the original video data, the target sampling mode for sampling the original video data.

4. The method according to claim 3, wherein the determining, according to the repetition rate of the video content in the original video data, the target sampling mode for sampling the original video data comprises at least one of the following:

   if the repetition rate of the video content in the original video data is greater than a first repetition rate threshold, determining a temporal sampling mode and a spatial sampling mode as the target sampling mode for sampling the original video data;
   if the repetition rate of the video content in the original video data is less than or equal to the first repetition rate threshold and greater than a second repetition rate threshold, determining the temporal sampling mode as the target sampling mode for sampling the original video data, wherein the second repetition rate threshold is less than the first repetition rate threshold; and
   if the repetition rate of the video content in the original video data is less than or equal to the second repetition rate threshold, determining the spatial sampling mode as the target sampling mode for sampling the original video data.

5. The method according to claim 2 or 3, wherein the determining, according to the video content feature, a target sampling mode for sampling the original video data comprises:

   determining complexity of video content in the original video data according to a video content information amount comprised in the video content feature; and
   determining, according to the complexity of the video content in the original video data, the target sampling mode for sampling the original video data.

6. The method according to claim 5, wherein the determining, according to the complexity of the video content in the original video data, the target sampling mode for sampling the original video data comprises at least one of the following:

if the complexity of the video content in the original video data is less than a first complexity threshold, determining a temporal sampling mode and a spatial sampling mode as the target sampling mode for sampling the original video data;
if the complexity of the video content in the original video data is greater than or equal to the first complexity threshold and less than a second complexity threshold, determining the spatial sampling mode as the target sampling mode for sampling the original video data, wherein the second complexity threshold is greater than the first complexity threshold; and
if the complexity of the video content in the original video data is greater than the second complexity threshold, determining the temporal sampling mode as the target sampling mode for sampling the original video data.

7. The method according to claim 2, wherein the determining a target sampling rate in the target sampling mode according to the video perceptual feature and the video content feature comprises:

if the target sampling mode is a temporal sampling mode, determining, according to the video perceptual feature, a limited quantity of video frames that correspond to the video data and that are perceived by the target object in unit time; and
determining a target sampling rate in the temporal sampling mode according to a ratio of the limited quantity of video frames to a quantity of played video frames, wherein the quantity of played video frames represents a quantity of video frames that are played in the unit time in the original video data and that are indicated by the video content feature.

8. The method according to claim 2, wherein the determining a target sampling rate in the target sampling mode according to the video perceptual feature and the video content feature comprises:

if the target sampling mode is a spatial sampling mode, determining, according to the video perceptual feature, a limited video resolution associated with the target object; and
determining a ratio of the limited video resolution to a video frame resolution as a target sampling rate in the spatial sampling mode, wherein the video frame resolution represents a video resolution that is of a video frame in the original video data and that is indicated by the video content feature.

9. The method according to claim 2, wherein the determining a target sampling rate in the target sampling mode according to the video perceptual feature and the video content feature comprises:

if the target sampling mode is a temporal sampling mode and a spatial sampling mode, determining, according to the video perceptual feature, a limited quantity of video frames that correspond to video data and that are perceived by the target object in unit time, and determining a limited video resolution associated with the target object;
determining a target sampling rate in the temporal sampling mode according to a ratio of the limited quantity of video frames to a quantity of played video frames, wherein the quantity of played video frames represents a quantity of video frames that are played in the unit time in the original video data and that are indicated by the video content feature; and
determining a ratio of the limited video resolution to a video frame resolution as a target sampling rate in the spatial sampling mode, wherein the video frame resolution represents a video resolution that is of a video frame in the original video data and that is indicated by the video content feature.

10. The method according to claim 2, wherein the sampling the original video data according to the target sampling parameter, to obtain sampled video data comprises:

if the target sampling mode is a temporal sampling mode, obtaining a play sequence number of a video frame in the original video data and a total video frame quantity of video frames comprised in the original video data;
determining, according to a target sampling rate in the temporal sampling mode and the total video frame quantity, a quantity of to-be-extracted video frames in the original video data as a first video frame quantity; and

extracting the first video frame quantity of video frames from the original video data according to the play sequence number of the video frame in the original video data as the sampled video data.

11. The method according to claim 2, wherein the sampling the original video data according to the target sampling parameter, to obtain sampled video data comprises:

if the target sampling mode is a spatial sampling mode, obtaining an original video resolution of a video frame $M_i$ in the original video data, wherein i is a positive integer less than or equal to M, and M is a quantity of video frames in the original video data;

performing resolution conversion on the video frame $M_i$ having the original video resolution according to a target sampling rate in the spatial sampling mode and the original video resolution of the video frame $M_i$, to obtain a video frame $M_i$ having a target video resolution; and

after performing resolution sampling on all video frames in the original video data, determining original video data obtained through resolution conversion as the sampled video data.

12. The method according to claim 11, wherein the performing resolution conversion on the video frame $M_i$ having the original video resolution according to a target sampling rate in the spatial sampling mode and the original video resolution of the video frame $M_i$, to obtain a video frame $M_i$ having a target video resolution comprises:

using a product of the target sampling rate in the spatial sampling mode and the original video resolution of the video frame $M_i$ as an initial video resolution;

performing resolution conversion on the video frame $M_i$ having the original video resolution, to obtain a video frame $M_i$ having the initial video resolution;

if the video frame $M_i$ having the initial video resolution does not meet an encoding condition, performing pixel padding on the video frame $M_i$ having the initial video resolution, determining a video resolution of a video frame $M_i$ obtained through padding as the target video resolution, and determining the video frame $M_i$ obtained through padding as the video frame $M_i$ having the target video resolution; and

if the video frame $M_i$ having the initial video resolution meets the encoding condition, determining the initial video resolution as the target video resolution, and determining the video frame $M_i$ having the initial video resolution as the video frame $M_i$ having the target video resolution.

13. The method according to claim 2, wherein the sampling the original video data according to the target sampling parameter, to obtain sampled video data comprises:

if the target sampling mode is a temporal sampling mode and a spatial sampling mode, determining a quantity of to-be-extracted video frames in the original video data as a second video frame quantity according to a target sampling rate in the temporal sampling mode and a total video frame quantity in the original video data;

extracting the second video frame quantity of video frames from the original video data according to a play sequence number of a video frame in the original video data as initial sampled video data;

obtaining an original video resolution of a video frame $N_j$ in the initial sampled video data, wherein j is a positive integer less than or equal to N, and N is a quantity of video frames in the initial sampled video data;

performing resolution conversion on the video frame $N_j$ having the original video resolution according to a target sampling rate in the spatial sampling mode and the original video resolution of the video frame $N_j$, to obtain a video frame $N_j$ having a target video resolution; and

after performing resolution sampling on all video frames in the initial sampled video data, determining initial sampled video data obtained through resolution sampling as the sampled video data.

14. A video decoding method, performed by a computer device, comprising:

obtaining to-be-decoded encoded video data and a target sampling parameter corresponding to the encoded video data, the encoded video data being obtained by encoding sampled video data, the sampled video data being obtained by sampling original video data corresponding to the encoded video data based on the target sampling parameter, the target sampling parameter being determined according to a media application scenario and a video content feature of the original video data;

decoding the encoded video data, to obtain the sampled video data; and

performing sampling restoration on the sampled video data according to the target sampling parameter, to obtain the original video data corresponding to the encoded video data.

15. The method according to claim 14, wherein the target sampling parameter is transmitted by an encoding device, and the target sampling parameter comprises a target sampling mode and a target sampling rate in the target sampling mode;

the target sampling mode is determined according to the video content feature; and
the target sampling rate in the target sampling mode is determined according to a video perceptual feature and the video content feature, the video perceptual feature is a perceptual feature of a target object for video data in the media application scenario, and the target object is an object that perceives the original video data.

16. The method according to claim 15, wherein the performing sampling restoration on the sampled video data according to the target sampling parameter, to obtain the original video data corresponding to the encoded video data comprises:

if the target sampling mode is a temporal sampling mode, determining a third video frame quantity between a first decoded video frame and a second decoded video frame according to a target sampling rate in the temporal sampling mode, wherein the first decoded video frame and the second decoded video frame are video frames whose play sequence numbers have a neighboring relationship in the sampled video data; and the third video frame quantity is a quantity of to-be-restored video frames between the first decoded video frame and the second decoded video frame;
inserting the third video frame quantity of restored video frames between the first decoded video frame and the second decoded video frame; and
determining, after a restored video frame is inserted between any two adjacent decoded video frames in the sampled video data, the original video data corresponding to the encoded video data according to sampled video data obtained through restoration.

17. The method according to claim 16, wherein the determining, after a restored video frame is inserted between any two adjacent decoded video frames in the sampled video data, the original video data corresponding to the encoded video data according to sampled video data obtained through restoration comprises:

after the restored video frame is inserted between the any two adjacent decoded video frames in the sampled video data, obtaining a fourth video frame quantity of video frames comprised in the sampled video data obtained through restoration and a total video frame quantity of video frames comprised in the original video data;
if the fourth video frame quantity is the same as the total video frame quantity, determining the sampled video data obtained through restoration as the original video data corresponding to the encoded video data; and
if the fourth video frame quantity is different from the total video frame quantity, obtaining a difference between the fourth video frame quantity and the total video frame quantity as a fifth video frame quantity, and inserting the fifth video frame quantity of restored video frames after the sampled video data obtained through restoration, to obtain the original video data corresponding to the encoded video data.

18. The method according to claim 15, wherein the performing sampling restoration on the sampled video data according to the target sampling parameter, to obtain the original video data corresponding to the encoded video data comprises:

if the target sampling mode is a spatial sampling mode, obtaining a current target video resolution of a third decoded video frame in the sampled video data;
performing resolution restoration on the third decoded video frame having the target video resolution according to a target sampling rate in the spatial sampling mode and the target video resolution, to obtain a third decoded video frame having an original video resolution; and
after all decoded video frames in the sampled video data are restored, determining sampled video data obtained through restoration as the original video data corresponding to the encoded video data.

19. The method according to claim 18, wherein the performing resolution restoration on the third decoded video frame having the target video resolution according to a target sampling rate in the spatial sampling mode and the target video resolution, to obtain a third decoded video frame having an original video resolution comprises at least one of the following:

if pixel padding location information of the third decoded video frame is received, performing pixel cropping on the third decoded video frame having the target video resolution according to the pixel padding location information, to obtain a third decoded video frame having an initial video resolution, determining a ratio of the initial video resolution to the target sampling rate in the spatial sampling mode as a to-be-restored original video resolution of the third decoded video frame, and performing resolution restoration on the third decoded video frame having the initial video resolution, to obtain the third decoded video frame having the original video resolution; and if the pixel padding location information of the third decoded video frame is not received, determining a ratio of the target sampling rate in the spatial sampling mode to the target video resolution as a to-be-restored original video resolution of the third decoded video frame, and performing resolution restoration on the third decoded video frame having the target video resolution, to obtain the third decoded video frame having the original video resolution.

20. The method according to claim 15, wherein the performing sampling restoration on the sampled video data according to the target sampling parameter, to obtain the original video data corresponding to the encoded video data comprises:

if the target sampling mode is a temporal sampling mode and a spatial sampling mode, obtaining a target video resolution of a third decoded video frame in the sampled video data, and performing resolution restoration on the target video resolution of the third decoded video frame according to a target sampling rate in the spatial sampling mode and the target video resolution, to obtain a third decoded video frame having an original video resolution; after all decoded video frames in the sampled video data are restored, determining sampled video data obtained through restoration as initial video data corresponding to the encoded video data; determining a sixth video frame quantity of to-be-restored video frames between a first initial video frame and a second initial video frame according to a target sampling rate in the temporal sampling mode, wherein the first initial video frame and the second initial video frame are video frames whose play sequence numbers have a neighboring relationship in the initial video data; and inserting the sixth video frame quantity of restored video frames between the first initial video frame and the second initial video frame, and determining, after a restored video frame is inserted between any two adjacent initial video frames in the initial video data, the original video data corresponding to the encoded video data according to initial video data obtained through restoration.

21. A video decoding apparatus, comprising:

a first obtaining module, configured to obtain to-be-decoded encoded video data and a target sampling parameter corresponding to the encoded video data, the encoded video data being obtained by encoding sampled video data, the sampled video data being obtained by sampling original video data corresponding to the encoded video data based on the target sampling parameter, the target sampling parameter being determined according to a media application scenario and a video content feature of the original video data; a decoding module, configured to decode the encoded video data, to obtain the sampled video data; and a sampling restoration module, configured to perform sampling restoration on the sampled video data according to the target sampling parameter, to obtain the original video data corresponding to the encoded video data.

22. A video encoding apparatus, comprising:

a second obtaining module, configured to obtain a media application scenario and a video content feature of to-be-encoded original video data; a second determining module, configured to determine, according to the media application scenario and the video content feature, a target sampling parameter for sampling the original video data; a sampling module, configured to sample the original video data according to the target sampling parameter, to obtain sampled video data; and an encoding module, configured to encode the sampled video data, to obtain encoded video data corresponding to the original video data.

23. A computer device, comprising: a processor and a memory,
the processor being connected to the memory, the memory being configured to store computer-readable instructions, and the processor being configured to invoke the computer-readable instructions, to enable the computer device to perform the method according to any one of claims 1 to 20.

24. A computer-readable storage medium, the computer-readable storage medium storing computer-readable instructions, and the computer-readable instructions being suitable to be loaded and executed by a processor, to enable a computer device comprising the processor to perform the method according to any one of claims 1 to 20.

25. A computer program product, comprising computer-readable instructions, the computer-readable instructions, when executed by a processor, implementing the operations of the method according to any one of claims 1 to 20.

Encoder control

Transform coefficient level and quantization parameter

$s_k[x,y]$

$u_k[x,y]$

Transform coding and quantization

Entropy coding

Bitstream

Partition a to-be-processed image

Zoom transform

$u'_k[x,y]$

$\hat{s}_k[x,y]$

Coding mode (intra-frame and inter-frame)

$s^*_k[x,y]$

Code mode recognition

Intra mode recognition

Current picture buffer

$f(s^*_k[x,y])$

Intra-frame prediction

$s^*_k[x,y]$

Motion compensation prediction

Loop filtering

$s'_r[x+m_x, y+m_y]$

$s'_k[x,y]$

Motion prediction

Decoded picture buffer

Reconstructed video

(for supervision)

FIG. 1

Inputted image

| $LCU_0$ | $LCU_1$ | $LCU_2$ | $LCU_3$ | $LCU_4$ | $LCU_5$ |
|---|---|---|---|---|---|
| $LCU_6$ | $LCU_7$ | $LCU_8$ | $LCU_9$ | $LCU_{10}$ | $LCU_{11}$ |
| $LCU_{12}$ | $LCU_{13}$ | $LCU_{14}$ | $LCU_{15}$ | $LCU_{16}$ | $LCU_{17}$ |

$LCU$: Largest coding unit

$CU$: Coding unit (image block)

FIG. 2

Encoding
device

Decoding
device

Obtain a media application scenario and a video
content feature of to-be-encoded original video data

S101

Determine, according to the media application
scenario and the video content feature, a target
sampling parameter for sampling the original video
data

S102

Sample the original video data according to the target
sampling parameter, to obtain sampled video data

S103

Encode the sampled video data, to obtain encoded
video data corresponding to the original video data

S104

Transmit the encoded video data

FIG. 3

Temporal sampling

FIG. 4

Spatial sampling

FIG. 5

Encoding
device

Decoding
device

Encoded video data

Obtain to-be-decoded encoded video data and a target
sampling parameter corresponding to the encoded video
data

S201

Decode the encoded video data, to obtain sampled video
data

S202

Perform sampling restoration on the sampled video data
according to the target sampling parameter, to obtain
original video data corresponding to the encoded video data

S203

FIG. 6

Video decoding apparatus

First obtaining module — 11

Decoding module — 12

— 13

Sampling restoration module

First determining unit 1301

Inserting unit 1302

Second determining unit 1303

Third determining unit 1306

Resolution restoration unit 1305

First obtaining unit 1304

Fourth determining unit 1307

Fifth determining unit 1308

Sixth determining unit 1309

Seventh determining unit 1310

Receiving module — 14

First determining module — 15

Image enhancement module — 16

FIG. 7

Video encoding apparatus

Second obtaining module — 21

Second determining module — 22

| Eighth determining unit 2201 | Ninth determining unit 2202 | Tenth determining unit 2203 |
| --- | --- | --- |
| Adjustment unit 2206 | Second obtaining unit 2205 | Eleventh determining unit 2204 |

Sampling processing module — 23

| Second obtaining unit 2301 | Twelfth determining unit 2302 | First extraction unit 2303 |
| --- | --- | --- |
| Thirteenth determining unit 2306 | First resolution conversion unit 2305 | Third obtaining unit 2304 |
| Fourteenth determining unit 2307 | Second extraction unit 2308 | Fourth obtaining unit 2309 |
| | Fifteenth determining unit 2311 | Second resolution conversion unit 2310 |

| Encoding module — 24 | First transmission module — 25 | Second transmission module — 26 | Third transmission module — 27 |
| --- | --- | --- | --- |

Fourth determining module — 28

| Vector conversion unit 2801 | Object extraction unit 2802 | Second generation unit 2803 |
| --- | --- | --- |

Fourth transmission module — 29

FIG. 8

1000

1001

Processor

1005

1002

Operating system

Network communication
module

User interface module

Device-control
application program

1003

User interface

Display

Keyboard

1004

Network
interface

Memory

Computer device

FIG. 9

2000

2001

Processor

2005

2002

Operating system

Network communication
module

User interface module

Device-control
application program

2003

User interface

Display

Keyboard

2004

Network
interface

Memory

Computer device

FIG. 10

## INTERNATIONAL SEARCH REPORT

| International application No. |
|---|
| **PCT/CN2023/106439** |

| | |
|---|---|
| **A.** | **CLASSIFICATION OF SUBJECT MATTER** |
| | H04N19/136(2014.01)i; H04N19/132(2014.01)i; H04N19/20(2014.01)i |

According to International Patent Classification (IPC) or to both national classification and IPC

| | |
|---|---|
| **B.** | **FIELDS SEARCHED** |

Minimum documentation searched (classification system followed by classification symbols)

  IPC:H04N

Documentation searched other than minimum documentation to the extent that such documents are included in the fields searched

Electronic data base consulted during the international search (name of data base and, where practicable, search terms used)

  CNTXT, ENTXTC, DWPI, ENTXT, CNKI, IEEE: 视频, 图片, 图像, 编码, 解码, 采样, 空间, 空域, 上采样, 下采样, 降采样, 时间, 时域, 抽帧, 变化, 场景, 应用, 对象, 人, 用户, 设备, 机器, 检测, 识别, 感知, 分辨率, 像素, 乘积, 填充, 复杂, 静止, 运动, 剧烈, 快速, 速率, 特性, 特征, 帧率, 帧数, 重复, 最大, 最低, 最高, 最小, 阈值, video, picture, image, encode, decode, sample, space, spatial domain, up sampling, down sampling, time, temporal domain, extraction, change, scene, application, object, person, user, device, machine, detection, recognition, resolution, pixel, padding, complex, motion, fast, rate, characteristic, feature, frame rate, repetition, maximum, minimum, highest, threshold

| | |
|---|---|
| **C.** | **DOCUMENTS CONSIDERED TO BE RELEVANT** |

| Category* | Citation of document, with indication, where appropriate, of the relevant passages | Relevant to claim No. |
|---|---|---|
| PX | CN 115643406 A (TENCENT TECHNOLOGY (SHENZHEN) CO., LTD.) 24 January 2023 (2023-01-24)<br>  claims 1-24, and description, paragraphs 2-259 | 1-25 |
| X | CN 108833918 A (TENCENT TECHNOLOGY (SHENZHEN) CO., LTD.) 16 November 2018 (2018-11-16)<br>  description, paragraphs 72-143, 239-315 and 374-406, and figures 5-20 | 1-3, 5, 14-15, 21-25 |
| Y | CN 108833918 A (TENCENT TECHNOLOGY (SHENZHEN) CO., LTD.) 16 November 2018 (2018-11-16)<br>  see citation above | 7-13, 16-20 |
| X | CN 108833917 A (TENCENT TECHNOLOGY (SHENZHEN) CO., LTD.) 16 November 2018 (2018-11-16)<br>  description, paragraphs 84-378, and figures 1-18 | 1-3, 5, 14-15, 21-25 |

☑ Further documents are listed in the continuation of Box C.   ☑ See patent family annex.

| | |
|---|---|
| * | Special categories of cited documents: |
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **26 October 2023** | **06 November 2023** |

| Name and mailing address of the ISA/CN | Authorized officer |
|---|---|
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/106439** |

### C. DOCUMENTS CONSIDERED TO BE RELEVANT

| Category* | Citation of document, with indication, where appropriate, of the relevant passages | Relevant to claim No. |
|---|---|---|
| Y | CN 108833917 A (TENCENT TECHNOLOGY (SHENZHEN) CO., LTD.) 16 November 2018 (2018-11-16) <br> see citation above | 7-13, 16-20 |
| Y | CN 112165632 A (BEIJING ZITIAO NETWORK TECHNOLOGY CO., LTD.) 01 January 2021 (2021-01-01) <br> description, paragraphs 31-145, and figures 1-7 | 7, 9, 10, 13, 16-17, 20 |
| Y | CN 103597839 A (DOLBY LABORATORIES LICENSING CORP.) 19 February 2014 (2014-02-19) <br> description, paragraphs 10-130, and figures 1-19 | 8-9, 11-13, 18-20 |
| A | US 10701394 B1 (TWITTER, INC.) 30 June 2020 (2020-06-30) <br> entire document | 1-25 |

Form PCT/ISA/210 (second sheet) (July 2022)

EP 4 604 527 A1

INTERNATIONAL SEARCH REPORT
Information on patent family members

International application No.

**PCT/CN2023/106439**

| Patent document cited in search report | | | Publication date (day/month/year) | Patent family member(s) | | | Publication date (day/month/year) |
|---|---|---|---|---|---|---|---|
| CN | 115643406 | A | 24 January 2023 | None | | | |
| CN | 108833918 | A | 16 November 2018 | US | 2020382792 | A1 | 03 December 2020 |
| | | | | US | 11451787 | B2 | 20 September 2022 |
| | | | | WO | 2019242486 | A1 | 26 December 2019 |
| CN | 108833917 | A | 16 November 2018 | JP | 2021516928 | A | 08 July 2021 |
| | | | | JP | 7114153 | B2 | 08 August 2022 |
| | | | | US | 2020389665 | A1 | 10 December 2020 |
| | | | | US | 11172220 | B2 | 09 November 2021 |
| | | | | WO | 2019242424 | A1 | 26 December 2019 |
| | | | | EP | 3813371 | A1 | 28 April 2021 |
| | | | | EP | 3813371 | A4 | 27 October 2021 |
| CN | 112165632 | A | 01 January 2021 | None | | | |
| CN | 103597839 | A | 19 February 2014 | JP | 2014522600 | A | 04 September 2014 |
| | | | | US | 2014098886 | A1 | 10 April 2014 |
| | | | | US | 9554132 | B2 | 24 January 2017 |
| | | | | EP | 2716041 | A2 | 09 April 2014 |
| | | | | EP | 2716041 | A4 | 15 October 2014 |
| | | | | WO | 2012166512 | A2 | 06 December 2012 |
| | | | | WO | 2012166512 | A3 | 31 January 2013 |
| US | 10701394 | B1 | 30 June 2020 | None | | | |

Form PCT/ISA/210 (patent family annex) (July 2022)

41

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 2022112635838